# EUROPEAN PATENT APPLICATION

(11) **EP 2 503 785 A1**
(43) Date of publication of application: **26.09.2012**
(21) Application number: 11836182.3
(22) Date of filing: 21.10.2011
(51) Int. Cl.: H04N 13/00, H04N 7/025, H04N 7/03, H04N 7/035

(54) **STEREOSCOPIC IMAGE DATA TRANSMISSION DEVICE, STEREOSCOPIC IMAGE DATA TRANSMISSION METHOD, STEREOSCOPIC IMAGE DATA RECEPTION DEVICE AND STEREOSCOPIC IMAGE DATA RECEPTION METHOD**

(30) Priority: 29.10.2010 JP 2010244837
(71) Applicant: Sony Corporation, Tokyo 108-0075 (JP)
(72) Inventor: TSUKAGOSHI, Ikuo, Tokyo 108-0075 (JP)
(74) Representative: Ealey, Douglas Ralph
(86) International application number: PCT/JP2011/074368
(87) International publication number: WO 2012/057048

(57) **Abstract**

[Object] To enable consistency to be maintained in perspective with the objects in an image when performing superimposing display of ARIB format captions (caption units).

[Solution] Caption data of each caption unit is inserted, as caption data (caption code) of a caption text data group, into a caption data stream. Also, disparity information (disparity vector) of each caption unit is inserted, as caption management data (control code) of a caption management data group, in the caption data stream. Since the caption data and disparity information are correlated, suitable disparity can be provided at the reception side to the caption units to be superimposed on the left eye image and right eye image.

## Description

### Technical Field

The present invention relates to a stereoscopic image data transmission device, a stereoscopic image data transmission method, a stereoscopic image data reception device, and a stereoscopic image data reception method, and particularly relates to a stereoscopic image data transmission device and the like capable of suitably performing display of superimposed information such as captions.

### Background Art

For example, proposed in PTL 1 is a transmission method of stereoscopic image data using television broadcast airwaves. With this transmission method, stereoscopic image data having image data for the left eye and image data for the right eye is transmitted, and stereoscopic image display using binocular disparity is performed at a television receiver.

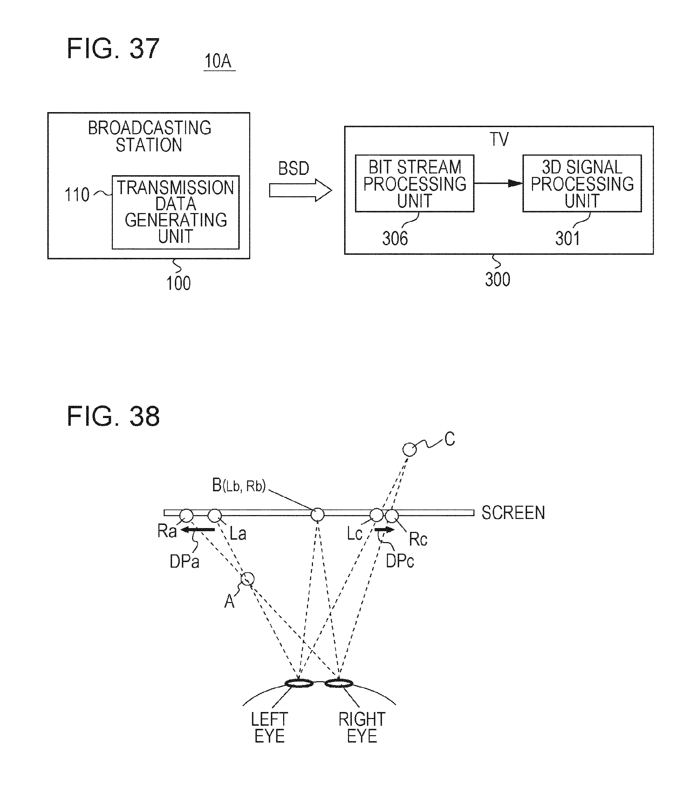

Fig. 38 illustrates relationship between the display positions of left and right images of an object (object) on a screen, and the playback position of the stereoscopic image thereof, with stereoscopic image display using binocular disparity. For example, with regard to an object A displayed with a left image La being shifted to the right side and a right image Ra being shifted to the left side on the screen as illustrated in the drawing, the left and right visual lines intersect in front of the screen surface, so the playback position of the stereoscopic image thereof is in front of the screen surface. DPa represents a disparity vector in the horizontal direction relating to the object A.

Also, for example, as illustrated on the screen, with regard to an object B where a left image Lb and a right image Rb are displayed on the same position, the left and right visual lines intersect on the screen surface, so the playback position of the stereoscopic image thereof is on the screen surface. Further, for example, with regard to an object C with a left image Lc being shifted to the left side and a right image Rc being shifted to the right side on the screen as illustrated in the drawing, the left and right visual lines intersect in the back from the screen surface, so the playback position of the stereoscopic image is in the back from the screen surface. DPc represents a disparity vector in the horizontal direction relating to the object C.

### Citation List

### Patent Literature

PTL 1: Japanese Unexamined Patent Application Publication No. 2005-6114

### Summary of Invention

### Technical Problem

With the stereoscopic image display such as described above, the viewer will normally sense perspective of the stereoscopic image taking advantage of binocular disparity. It is anticipated that superimposing information superimposed on the image, such as captions and the like for example, will be rendered not only in two-dimensional space but further rendered in conjunction with the stereoscopic image display with a three-dimensional sense of depth.

For example, in the event of performing superimposed display (overlay display) of captions on an image, the viewer may sense inconsistency in perspective unless the display is made closer to the viewer than the closest object (object) within the image in terms of perspective. Also, in the case of superimposed displaying of other graphics information or text information on an image, it is anticipated that disparity adjustment will be performed in accordance with the perspective of the objects within the image, so as to maintain consistency in perspective.

It is an object of the present invention to maintain consistency in perspective with the objects in an image when performing display of superimposed information such as captions and the like. Also, it is an object of the present invention to enable stable transmission of disparity information without affecting the already-existing 8-bit-code code system in the ARIB format, for example.

### Solution to Problem

A concept of the present invention is a stereoscopic image data transmission device including:
an image data output unit configured to output left eye image data and right eye image data configuring a stereoscopic image;
a superimposing information data output unit configured to output data of superimposing information to be superimposed on an image of the left eye image data and the right eye image data;
a disparity information output unit configured to output disparity information for providing disparity by shifting superimposing information to be superimposed on the image of the left eye image data and the right eye image data; and
a data transmission unit configured to transmit a multiplexed data stream having a first data stream including the image data and a second data stream including the data of superimposing information and the disparity information;
wherein the second data stream has a data unit for sending display control information serving as management information of the superimposing information;
and wherein the disparity information is inserted in the data unit.

With the present invention, the image data output unit outputs left eye image data and right eye image data configuring a stereoscopic image. Also, the superimposing information data output unit outputs data of superimposing information to be superimposed on an image of the left eye image data and the right eye image data. Now, superimposing information means information of captions and the like to be superimposed on the image. Also, the disparity information output unit outputs disparity information for providing disparity by shifting superimposing information to be superimposed on the image of the left eye image data and the right eye image data.

Then, the data transmission unit transmits a multiplexed data stream having a first data stream and a second data stream. The first data stream includes the left eye image data and right eye image data. Also, the second data stream includes the data of superimposing information and the disparity information.

The second data stream has a data unit for sending display control information serving as management information of the superimposing information. The disparity information is inserted in the data unit. For example, the data of superimposing information is ARIB format caption text data, and in the second data stream, the disparity information is inserted in the data unit of the display control information included in the caption management data. For example, the disparity information inserted to this data unit is distinguished from other display control information by type information. For example, the disparity information inserted in the data unit is disparity information corresponding to a particular superimposing information displayed in the same screen, or multiple superimposing information displayed in the same screen.

In this way, with the present invention, disparity information is inserted in the second data stream as management information of superimposing information, and superimposing information and disparity information are correlated. At the reception side, suitable disparity can be provided to superimposing information to be superimposed on the left eye image and right eye image, using corresponding disparity information. Accordingly, in display of superimposing information such as captions and the like, consistency in perspective with the objects in the image can be maintained in an optimal state.

Also, with the present invention, the second data stream has a data unit for sending display control information serving as management information of the superimposing information, and the disparity information is inserted into the data unit. Accordingly, with the ARIB format for example, stable transmission of the disparity information is enable without affecting the already-existing 8-bit-code code system.

Note that with the present invention, for example, the disparity information is first disparity information used in common within a predetermined number of frame periods during which the superimposing information is displayed, or the first disparity information and second disparity information sequentially updated within the predetermined number of frame periods; and flag information indicating existence of the second disparity information may be inserted in the data unit. In this case, selection can be made whether to transmit only the first disparity information, or to further transmit the second disparity information. By transmitting the second disparity information, disparity to be provided to the superimposing information can be dynamically changed in conjunction with change in the contents of the image at the reception side.

Also, with the present invention, for example, the second disparity information may be made up of disparity information of the first frame in the predetermined number of frame periods, and disparity information of frames every subsequent updating frame interval. In this case, the updating frame interval is set optionally. For example, in the event that change of disparity information in the temporal direction (frame direction) is great, the change in the temporal direction of the disparity information can be more correctly communicated to the reception side by shortening the updating frame interval. Also, for example, in the event that the change of disparity information in the temporal direction is small, the data amount of disparity information can be suppressed by lengthening the updating frame interval.

Also, with the present invention, for example, the second disparity information may have added thereto flag information indicating whether or not there is updating of the disparity information, for each frame of the every updating frame interval. In this case, if periods in which change of disparity information in the temporal direction is similar are continuous, transmission of disparity information within the period can be omitted using this flag information, thereby enabling the data amount of disparity information to be suppressed.

Also, with the present invention, for example, the second disparity information may have added thereto information for adjusting the updating frame interval, for each frame of the every updating frame interval. In this case, the updating frame interval can be optionally adjusted in the direction of being shorter or in the direction of being longer, based on the adjustment information, and the change in the temporal direction of the disparity information can be more correctly communicated to the reception side.

Also, with the present invention, for example, the data unit, whereby display control information into which disparity information is inserted is sent, may have information specifying frame cycle inserted thereto. Accordingly, the updating frame interval of disparity information intended at the transmission side can be correctly communicated to the reception side. In the event that this information is not added, the video frame cycle, for example, is referenced at the reception side.

Also, with the present invention, for example, the data unit, whereby display control information into which disparity information is inserted is sent, may have inserted therein information indicating a level of correspondence as to the disparity information, essential at the time of displaying the superimposing information. In this case, handling of the disparity information at the reception side can be controlled with this information.

Also, with the present invention, for example, the second data stream may include, in a layer of the management information, flag information indicating whether or not the second data stream corresponds to extended display of the superimposing information. In this case, the reception side can readily comprehend where the or not extended display of superimposing information, e.g., 3-dimensional display or the like, is handled by this flag information.

Another aspect of the present invention is a stereoscopic image data reception device including:
a data reception unit configured to receive a multiplexed data stream having a first data stream and a second data stream;
wherein the first data stream includes left eye image data and right eye image data configuring a stereoscopic image;
and wherein the second data stream includes data of superimposing information to be superimposed on an image of the left eye image data and the right eye image data, and disparity information for providing disparity by shifting superimposing information to be superimposed on the image of the left eye image data and the right eye image data;
and wherein the second data stream has a data unit for sending display control information serving as management information of the superimposing information, and the disparity information is inserted in the data unit;
and further including
an image data obtaining unit configured to obtain the left eye image data and the right eye image data from the first data stream included in the multiplexed data stream;
a superimposing information data obtaining unit configured to obtain data of the superimposing information from the second data stream included in the multiplexed data stream;
a disparity information obtaining unit configured to obtain the disparity information from the second data stream included in the multiplexed data stream; and
an image data processing unit configured to provide disparity to the same superimposing information to be superimposed on a left eye image and a right eye image, using the left eye image data and the right eye image data, the disparity information, and data of the superimposing information, thereby obtaining data of a left eye image upon which the superimposing information has been superimposed and data of a right eye image upon which the superimposing information has been superimposed.

With the present invention, a data reception unit receives a multiplexed data stream having a first data stream and a second data stream. The first data stream includes left eye image data and right eye image data configuring a stereoscopic image. Also, the second data stream includes data of superimposing information to be superimposed on an image of the left eye image data and the right eye image data, and disparity information for providing disparity by shifting superimposing information to be superimposed on the image of the left eye image data and the right eye image data.

The second data stream has a data unit for sending display control information serving as management information of the superimposing information, with the disparity information being inserted in the data unit. For example, the data of superimposing information is ARIB format caption text data, and in the second data stream, the disparity information is inserted in the data unit of the display control information included in the caption management data. For example, the disparity information inserted to this data unit is distinguished from other display control information by type information.

The image data obtaining unit obtains the left eye image data and the right eye image data from the first data stream included in the multiplexed data stream. Also, the superimposing information data obtaining unit obtains data of the superimposing information from the second data stream included in the multiplexed data stream. Also, the disparity information obtaining unit configured to obtain the disparity information from the second data stream included in the multiplexed data stream.

The image data processing unit then provides disparity to the same superimposing information to be superimposed on a left eye image and a right eye image, using the left eye image data and the right eye image data, the disparity information, and data of the superimposing information, thereby obtaining data of a left eye image upon which the superimposing information has been superimposed and data of a right eye image upon which the superimposing information has been superimposed.

In this way, with the present invention, disparity information is inserted in the second data stream as management information of the superimposing information, and the superimposing information and disparity information are correlated. Accordingly, at the image data processing unit, suitable disparity can be provided to the superimposing information to be superimposed on the left eye image and right eye image using the corresponding disparity information. Accordingly, in display of superimposing information such as captions and the like, consistency in perspective with the objects in the image can be maintained in an optimal state.

Also, with the present invention, for example, disparity information inserted in the data unit is disparity information sequentially updated within a predetermined number of frame periods during which the superimposing information is displayed, and may be made up of disparity information of the first frame in the predetermined number of frame periods, and disparity information of frames every subsequent updating frame interval. In this case, the disparity to be provided to the superimposing information may be dynamically changed in conjunction with the change in image contents.

Also, with the present invention, for example, the image data processing unit may perform interpolation processing on disparity information of a plurality of frames making up disparity information sequentially updated within the predetermined number of frame periods, and generate and use disparity information of arbitrary frame intervals within the predetermined number of frame intervals. In this case, even in the event that disparity information is transmitted from the transmission side at each updating frame interval, the disparity to be provided to the superimposing information can be controlled at fine intervals, e.g., every frame.

In this case, interpolation processing may be linear interpolation processing, or for example, may involve low-pass filter processing in the temporal direction (frame direction). Accordingly, even in the event that disparity information is transmitted from the transmission side at each updating frame interval, change of the disparity information following interpolation processing in the temporal direction can be smoothed, and unnatural sensation of the transition of disparity applied to the superimposing information becoming discontinuous at each updating frame interval can be suppressed. Advantageous Effects of Invention

According to the present invention, disparity information is inserted in the second data stream including superimposing information, as management information of the superimposing information, and the superimposing information and disparity information are correlated. Accordingly, at the reception side, suitable disparity can be provided to the superimposing information to be superimposed on the left eye image and right eye image, using the corresponding disparity information. Accordingly, in display of superimposing information such as captions and the like, consistency in perspective with the objects in the image can be maintained in an optimal state.

Also, according to the present invention, the second data stream has a data unit for sending display control information serving as management information of the superimposing information, and the disparity information is inserted into the data unit. Accordingly, with the ARIB format for example, stable transmission of the disparity information is enable without affecting the already-existing 8-bit-code code system. Brief Description of Drawings

[Fig. 1] Fig. 1 is a block diagram illustrating a configuration example of a stereoscopic image display system as an embodiment of the present invention.
[Fig. 2] Fig. 2 is a block diagram illustrating a configuration example of a transmission data generating unit at a broadcasting station.
[Fig. 3] Fig. 3 is a diagram illustrating image data of a 1920 x 1080 pixel format.
[Fig. 4] Fig. 4 is a diagram for describing a "Top & Bottom" format, a "Side by Side" format, and a "Frame Sequential" format, which are transmission formats of stereoscopic image data (3D image data).
[Fig. 5] Fig. 5 is a diagram for describing an example of detecting disparity vectors in a right eye image as to a left eye image.
[Fig. 6] Fig. 6 is a diagram for describing obtaining disparity vectors by block matching format.
[Fig. 7] Fig. 7 is a diagram illustrating a configuration example of a caption data stream and a display example of caption units (caption).
[Fig. 8] Fig. 8 is a diagram illustrating an example of an image in a case of using values of disparity vectors for each pixel (pixel) as luminance values of each pixel (each pixel).
[Fig. 9] Fig. 9 is a diagram illustrating an example of disparity vectors for each block (Block).
[Fig. 10] Fig. 10 is a diagram for describing downsizing processing performed at a disparity information creating unit of the transmission data generating unit.
[Fig. 11] Fig. 11 is a diagram illustrating a configuration example of a caption data stream generated at a caption encoder and a creation example of disparity vectors in this case.
[Fig. 12] Fig. 12 is a diagram illustrating another configuration example of a caption data stream generated at a caption encoder and a creation example of disparity vectors in this case.
[Fig. 13] Fig. 13 is a diagram for describing a case of shifting the position of each caption unit superimposed on a first and a second view.
[Fig. 14] Fig. 14 is a diagram illustrating a packet structure of caption code included in a PES stream of a caption text data group.
[Fig. 15] Fig. 15 is a diagram illustrating a packet structure of control code included in a PES stream of a caption management data group.
[Fig. 16] Fig. 16 is a diagram illustrating the structure of a data group within an ARIB format caption data stream (PES stream).
[Fig. 17] Fig. 17 is a diagram schematically illustrating the structure of caption management data (caption_management_data) serving as "data_group_data_byte" in a data group structure, in the case of a caption management data group.
[Fig. 18] Fig. 18 is a diagram schematically illustrating the structure of caption management data (caption_data) serving as "data_group_data_byte" in a data group structure, in the case of a caption text data group.
[Fig. 19] Fig. 19 is a diagram illustrating the structure of a data unit (data_unit) included in a caption data stream.
[Fig. 20] Fig. 20 is a diagram illustrating types of data units, data unit parameters, and functions.
[Fig. 21] Fig. 21 is a diagram illustrating the structure of a newly-defined extended display control data unit (data_unit).
[Fig. 22] Fig. 22 is a diagram illustrating the structure of a newly-defined extended display control data unit (data_unit).
[Fig. 23] Fig. 23 is a diagram illustrating the structure of "Advanced_Rendering_Control" within a data unit (data unit).
[Fig. 24] Fig. 24 is a diagram illustrating the structure of "disparity_information" within "Advanced_Rendering_Control".
[Fig. 25] Fig. 25 is a diagram illustrating a structure of "disparity_temporal_extension" within "disparity_information".
[Fig. 26] Fig. 26 is a diagram illustrating primary data stipulation contents in the structure of "Advanced_Rendering_Control" and "disparity_information".
[Fig. 27] Fig. 27 is a diagram illustrating primary data stipulation contents in the structure of "Advanced_Rendering_Control" and "disparity_information".
[Fig. 28] Fig. 28 is a diagram illustrating an example of updating disparity information each base segment period (BSP) within a caption display period.
[Fig. 29] Fig. 29 is a diagram illustrating an example of updating disparity information each base segment period (BSP) within a caption display period.
[Fig. 30] Fig. 30 is a diagram illustrating another structure of "disparity_information" within "Advanced_Rendering_Control".
[Fig. 31] Fig. 31 is a diagram illustrating a display example of captions (graphics information) on an image, and perspective of background, closeup view object, and captions.
[Fig. 32] Fig. 32 is a diagram illustrating a display example of caption on a screen, and a left eye caption LGI and right eye caption RGI for displaying captions.
[Fig. 33] Fig. 33 is a block diagram illustrating a configuration example of a set top box configuring a stereoscopic image display system.
[Fig. 34] Fig. 34 is a block diagram illustrating a configuration example of a bit stream processing unit configuring a set top box.
[Fig. 35] Fig. 35 is a diagram illustrating an example of generating disparity information arbitrary frame intervals (interpolated disparity information), by performing interpolation processing involving low-pass filter processing on multiple frames of disparity information making up disparity information which is sequentially updated within a caption display period.
[Fig. 36] Fig. 36 is a block diagram illustrating a configuration example of a television receiver configuring a stereoscopic image display system.
[Fig. 37] Fig. 37 is a block diagram illustrating another configuration example of a stereoscopic image display system.
[Fig. 38] Fig. 38 is a diagram for describing the relation between the display position of left and right images of an object on a screen and the reproduction position of the stereoscopic image thereof, in stereoscopic image display using binocular disparity.

### Description of Embodiments

A mode for implementing the present invention (hereafter, referred to as "embodiment") will now be described. Note that description will be made in the following sequence.

### 1. Embodiment

### 2. Modifications

### <1. Embodiment>

### [Configuration Example of Stereoscopic Image Display System]

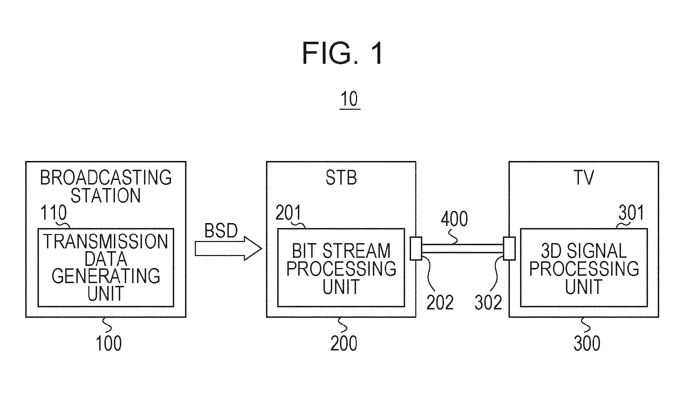

Fig. 1 illustrates a configuration example of a stereoscopic image display system 10 as an embodiment. This stereoscopic image display system 10 includes a broadcasting station 100, a set top box (STB: Set Top Box) 200, and a television receiver (TV: Television) 300.

The set top box 200 and the television receiver 300 are connected via an HDMI (High Definition Multimedia Interface) cable 400. With the set top box 200, an HDMI terminal 202 is provided. With the television receiver 300, an HDMI terminal 302 is provided. One end of the HDMI cable 400 is connected to the HDMI terminal 202 of the set top box 200, and the other end of this HDMI cable 400 is connected to the HDMI terminal 302 of the television receiver 300.

### [Description of Broadcasting Station]

The broadcasting station 100 transmits bit stream data BSD by carrying this on broadcast waves. The broadcasting station 100 has a transmission data generating unit 110 which generates bit stream data BSD. This bit stream data BSD includes image data, audio data, superposition information data, and further disparity information (disparity vectors) and so forth. The image data (hereinafter referred to as "stereoscopic image data" as appropriate) includes left eye image data and right eye image data making up a stereoscopic image. Superposition information is graphics information, text information, and so forth, but in this embodiment is captions.

### [Configuration Example of Transmission Data Generating Unit]

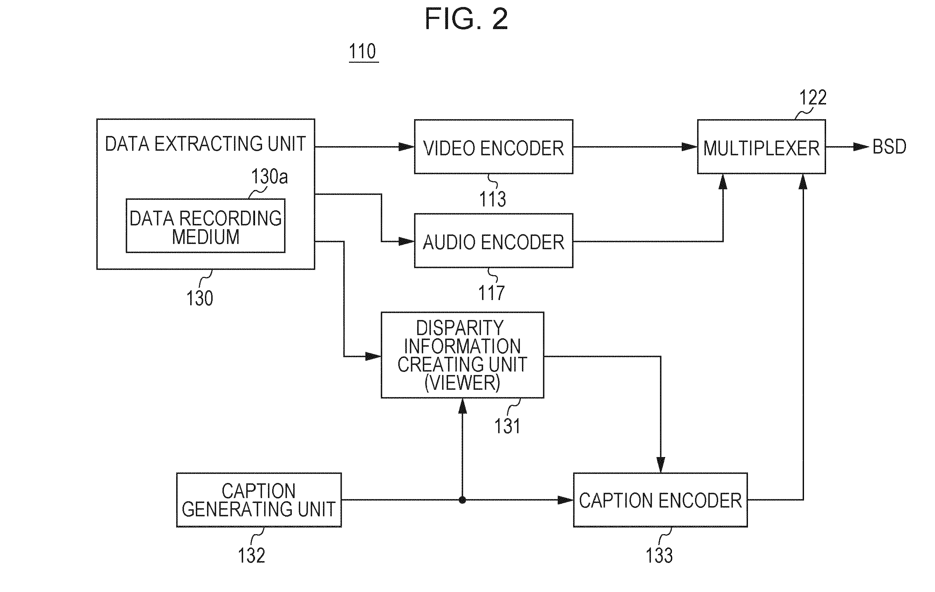

Fig. 2 illustrates a configuration example of the transmission data generating unit 110 of the broadcasting station 100. This transmission data generating unit 110 transmits disparity information (disparity vectors) in a data structure which is readily compatible with the ARIB (Association of Radio Industries and Business) format which is an existing broadcasting standard. The transmission data generating unit 110 includes a data extracting unit (archive unit) 130, a disparity information creating unit 131, a video encoder 113, an audio encoder 117, a caption generating unit 132, a caption encoder 133, and a multiplexer 122.

A data recording medium 130a is, for example, detachably mounted to the data extracting unit 130. This data recording medium 130a has recorded therein, along with stereoscopic image data including left eye image data and right eye image data, audio data and disparity information, in a correlated manner. The data extracting unit 130 extracts, from the data recording medium 130a, the stereoscopic image data, audio data, disparity information, and so forth, and outputs this. The data recording medium 130a is a disc-shaped recording medium, semiconductor memory, or the like.

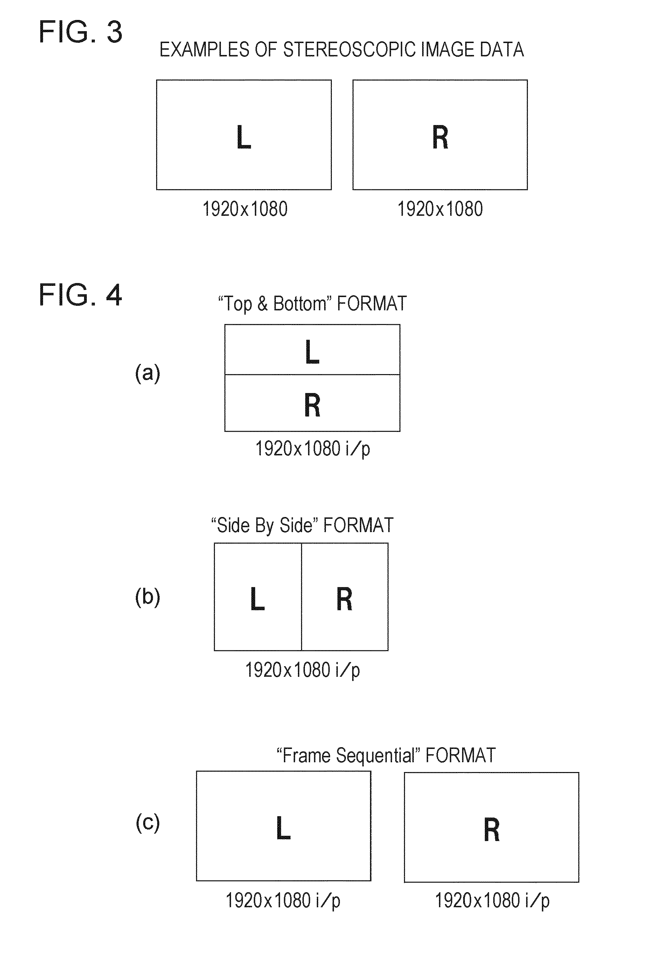

The stereoscopic image data recorded in the data recording medium 130a is stereoscopic image data of a predetermined transmission format. An example of the transmission format of stereoscopic image data (3D image data) will be described. While the following first through third methods are given as transmission methods, transmission methods other than these may be used. Here, as illustrated in Fig. 3, description will be made regarding a case where each piece of image data of the left eye (L) and the right eye (R) is image data with determined resolution, e.g., a pixel format of 1920 x 1080, as an example.

The first transmission method is a top & bottom (Top & Bottom) format, and is, as illustrated in Fig. 4(a), a format for transmitting the data of each line of left eye image data in the first half of the vertical direction, and transmitting the data of each line of left eye image data in the second half of the vertical direction. In this case, the lines of the left eye image data and right eye image data are thinned out to 1/2, so the vertical resolution is reduced to half as to the original signal.

The second transmission method is a side by side (Side By Side) format, and is, as illustrated in Fig. 4(b), a format for transmitting pixel data of the left eye image data in the first half of the horizontal direction, and transmitting pixel data of the right eye image data in the second half of the horizontal direction. In this case, the left eye image data and right eye image data each have the pixel data thereof in the horizontal direction thinned out to 1/2, so the horizontal resolution is reduced to half as to the original signal.

The third transmission method is a frame sequential (Frame Sequential) format, and is, as illustrated in Fig. 4(c), a format for transmitting left eye image data and right eye image data by sequentially switching these for each frame. Note that this frame sequential format is also sometimes called full frame (Full Frame) format or backward compatible (BackwardCompatible) format.

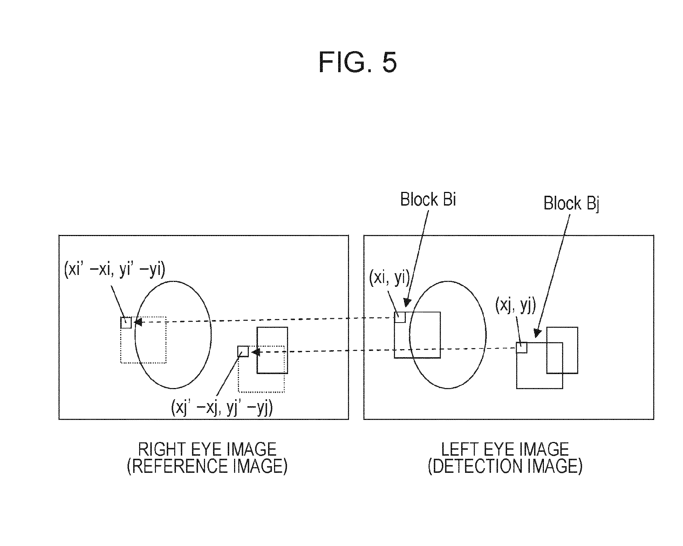

Also, the disparity information recorded in the data recording medium 130a is disparity vectors for each of pixels (pixels) configuring an image, for example. A detection example of disparity vectors will be described. Here, an example of detecting a disparity vector of a right eye image as to a left eye image will be described. As illustrated in Fig. 5, the left eye image will be taken as a detection image, and the right eye image will be taken as a reference image. With this example, disparity vectors in the positions of (xi, yi) and (xj, yj) will be detected.

Description will be made regarding a case where the disparity vector in the position of (xi, yi) is detected, as an example. In this case, a pixel block (disparity detection block) Bi of, for example, 4 × 4, 8 × 8, or 16 × 16 with the pixel position of (xi, yi) as upper left is set to the left eye image. Subsequently, with the right eye image, a pixel block matched with the pixel block Bi is searched.

In this case, a search range with the position of (xi, yi) as the center is set to the right eye image, and comparison blocks of, for example, 4 × 4, 8 × 8, or 16 × 16 as with the above pixel block Bi are sequentially set with each pixel within the search range sequentially being taken as the pixel of interest.

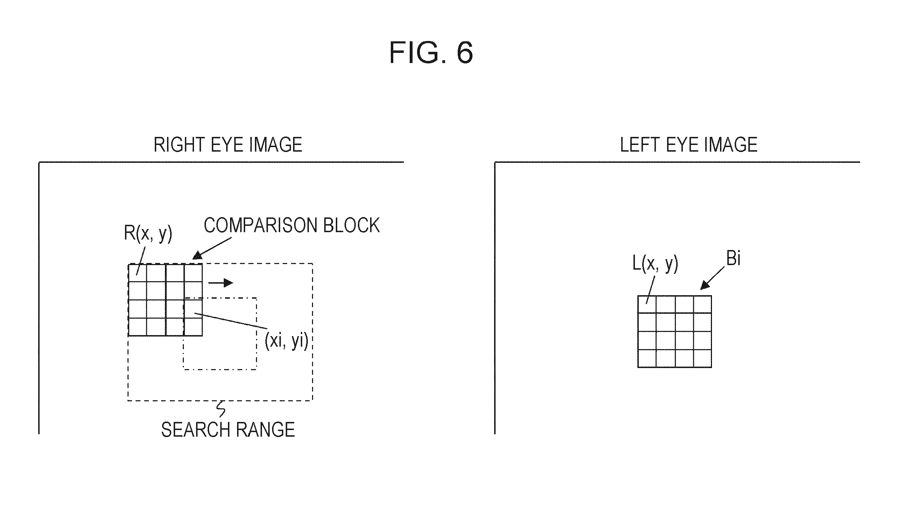

Summation of the absolute value of difference for each of the corresponding pixels between the pixel block Bi and a comparison block sequentially set is obtained. Here, as illustrated in Fig. 6, if we say that the pixel value of the pixel block Bi is L(x, y), and the pixel value of a comparison block is R(x, y), the summation of the difference absolute value between the pixel block Bi and the certain comparison block is represented with ∑|(x, y) - R(x, y)|.

When n pixels are included in the search range set to the right eye image, finally, n summations S1 through Sn are obtained, of which the minimum summation Smin is selected. Subsequently, the position (xi', yi') of an upper left pixel is obtained from the comparison block from which the summation Smin has been obtained. Thus, the disparity vector in the position of (xi, yi) is detected as (xi' - xi, yi' - yi) in the position of (xi, yi). Though detailed description will be omitted, with regard to the disparity vector in the position (xj, yj) as well, a pixel block Bj of, for example, 4 × 4, 8 × 8, or 16 × 16 with the pixel position of (xj, yj) as upper left is set to the left eye image, and detection is made in the same process.

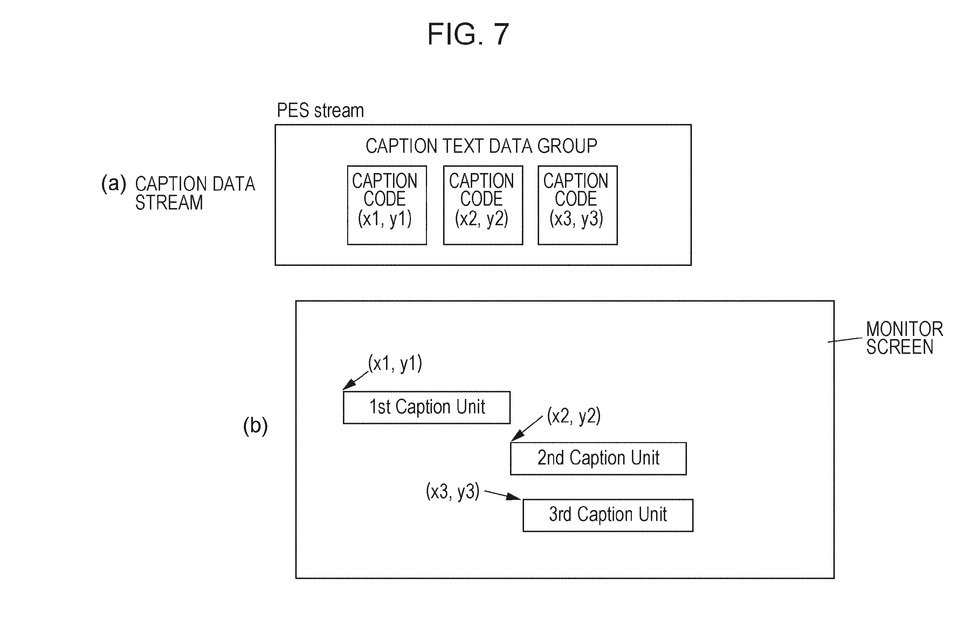

Returning to Fig. 2, the caption generating unit 132 generates caption data (ARIB format caption text data). The caption encoder 133 generates a caption data stream including caption data generated at the caption generating unit 132 (caption elementary stream). Fig. 7(a) illustrates a configuration example of a caption data stream. This example illustrates an example where thee caption units (captions) of a "1st Caption Unit", "2nd Caption Unit", and "3rd Caption Unit" are displayed in the same screen, as shown in Fig. 7(b).

Caption data for each caption unit is inserted in the caption data stream, as caption text data (caption code) of a caption text data group. Note that setting data such as display region of the caption units is inserted in the caption data stream as data of the caption management data group, though not illustrated in the drawings. The display regions of the caption units of "1st Caption Unit", "2nd Caption Unit", and "3rd Caption Unit" are indicated by (x1, y1), (x2, y2), and (x3, y3), respectively.

The disparity information creating unit 131 has a viewer function. This disparity information creating unit 131 subjects the disparity information output from the data extracting unit 130, i.e., disparity vectors in increments of pixels (pixels) to downsizing processing, and generates disparity vectors belonging to predetermined regions.

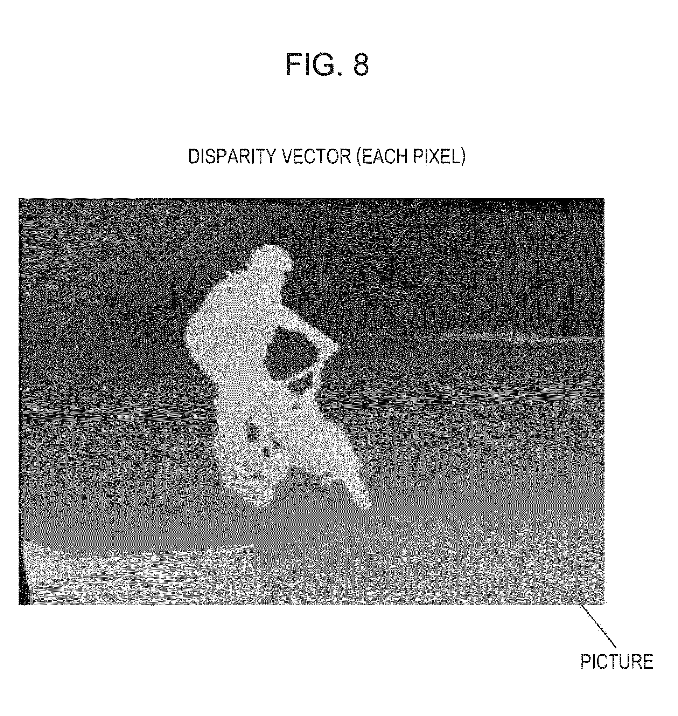

Fig. 8 illustrates an example of data in the relative depth direction to be given such as the luminance value of each pixel (pixel). Here, the data in the relative depth direction can be handled as a disparity vector for each pixel by predetermined conversion. With this example, the luminance values of a person portion are high. This means that the value of a disparity vector of the person portion is great, and accordingly, with stereoscopic image display, this means that this person portion is perceived to be in a state of being closer. Also, with this example, the luminance values of the background portion are low. This means that the value of a disparity vector of the background portion is small, and accordingly, with stereoscopic image display, this means that this background portion is perceived to be in a state of being farther away.

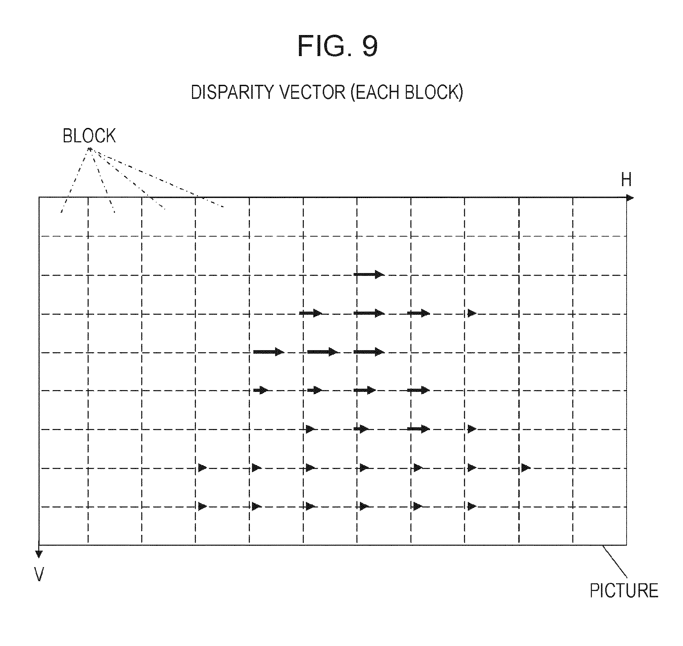

Fig. 9 illustrates an example of the disparity vector for each block (Block). The block is equivalent to the level above pixels (pixels) positioned in the lowermost level. This block is configured of an image (picture) area being divided with predetermined sizes in the horizontal direction and the vertical direction. The disparity vector of each block is obtained, for example, by a disparity vector of which the value is the greatest being selected out of the disparity vectors of all the pixels (pixels) existing within the block thereof. With this example, the disparity vector of each block is illustrated by an arrow, and the length of the arrow corresponds to the size of the disparity vector.

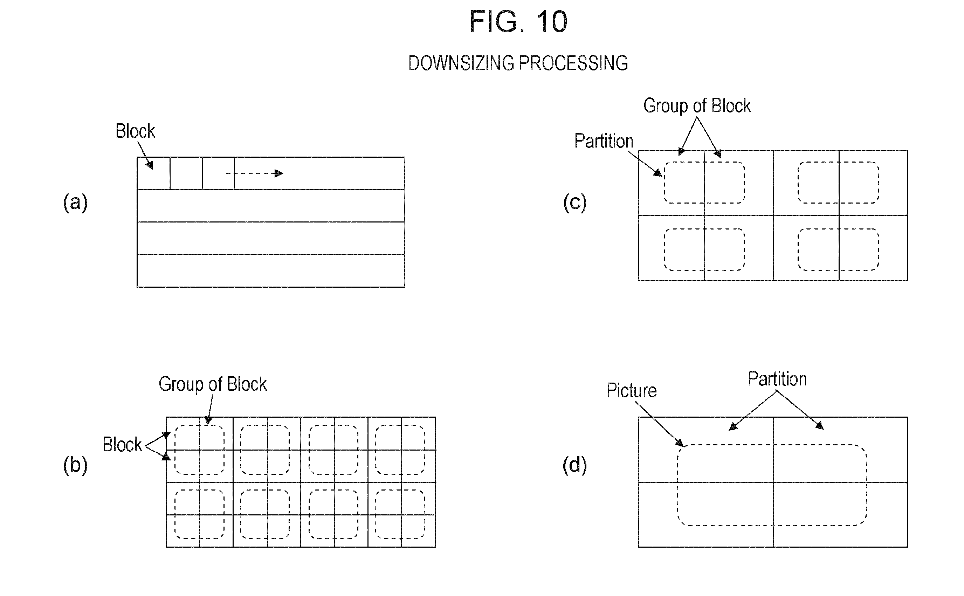

Fig. 10 illustrates an example of the downsizing processing to be performed at the disparity information creating unit 131. First, the disparity information creating unit 131 uses, as illustrated in Fig. 10(a), the disparity vector for each pixel (pixel) to obtain the disparity vector with a sign for each block. As described above, the block is equivalent to the level above pixels (pixels) positioned in the lowermost level, and is configured by an image (picture) area being divided with predetermined sizes in the horizontal direction and the vertical direction. The disparity vector of each block is obtained, for example, by a disparity vector having the greatest value being selected out of the disparity vectors of all the pixels (pixels) existing within the block thereof.

Next, the disparity information creating unit 131 uses, as illustrated in Fig. 10(b), the disparity vector for each block to obtain the disparity vector for each group (Group Of Block). The group is equivalent to the level above blocks, and is obtained by collectively grouping multiple adjacent blocks. With the example in Fig. 10(b), each group is made up of four blocks bundled with a dashed-line frame. Subsequently, the disparity vector of each group is obtained, for example, by a disparity vector having the greatest value being selected out of the disparity vectors of all the blocks within the group thereof.

Next, the disparity information creating unit 131 uses, as illustrated in Fig. 10(c), the disparity vector for each group to obtain the disparity vector for each partition (Partition). The partition is equivalent to the level above groups, and is obtained by collectively grouping multiple adjacent groups. With the example in Fig. 10(c), each partition is made up of two groups bundled with a dashed-line frame. Subsequently, the disparity vector of each partition is obtained, for example, by a disparity vector having the greatest value being selected out of the disparity vectors of all the groups within the partition thereof.

Next, the disparity information creating unit 131 uses, as illustrated in Fig. 10(d), the disparity vector for each partition to obtain the disparity vector of the entire picture (entire image) positioned in the uppermost level. With the example in Fig. 10(d), the entire picture includes four partitions bundled with a dashed-line frame. Subsequently, the disparity vector of the entire picture is obtained, for example, by a disparity vector having the greatest value being selected out of the disparity vectors of all the partitions included in the entire picture.

In this way, the disparity information creating unit 131 subjects the disparity vector for each pixel (pixel) positioned in the lowermost level to downsizing processing, whereby the disparity vector of each area of each hierarchical level of a block, group, partition, and the entire picture can be obtained. Note that, with an example of downsizing processing illustrated in Fig. 10, eventually, in addition to the hierarchical level of pixels (pixels), the disparity vectors of the four hierarchical levels of blocks, groups, partitions, and the entire picture are obtained. However, the number of hierarchical levels, how to partition the area of each hierarchical level, and the number of regions, are not restricted to this example.

The disparity information creating unit 131 creates disparity vectors corresponding to a predetermined number of caption units (captions) displayed on the same screen, by way of the above-described downsizing processing. In this case, the disparity information creating unit 131 either creates disparity vectors for each caption unit (individual disparity vectors), or creates a disparity vector shared between the caption units (common disparity vector). The selection thereof is by user settings, for example.

In the event of creating individual disparity vectors, the disparity information creating unit 131 obtains the disparity vector belonging to that display region by the above-described downsizing processing, based on the display region of each caption unit. Also, in the event of creating a common disparity vector, the disparity information creating unit 131 obtains the disparity vectors of the entire picture (entire image) by the above-described downsizing processing (see Fig. 10(d)). Note that an arrangement may be made where, in the event of creating a common disparity vector, the disparity information creating unit 131 obtains disparity vectors belonging to the display area of each caption unit and selects the disparity vector with the greatest value.

As described above, the caption encoder 133 includes the disparity vector (disparity information) created at the disparity information creating unit 131 as described above in the caption data stream. In this case, the caption data of each caption unit displayed in the same screen is inserted in the caption data stream as caption text data (caption code) of the caption text data group. Also, disparity vectors are inserted in this caption data stream, as caption management data (control code) for the caption management data group.

Now, description will be made regarding a case where individual disparity vectors are to be created with the disparity information creating unit 131. Here, we will consider an example where three caption units (captions) of "1st Caption Unit", "2nd Caption Unit", and "3rd Caption Unit" are displayed on the same screen.

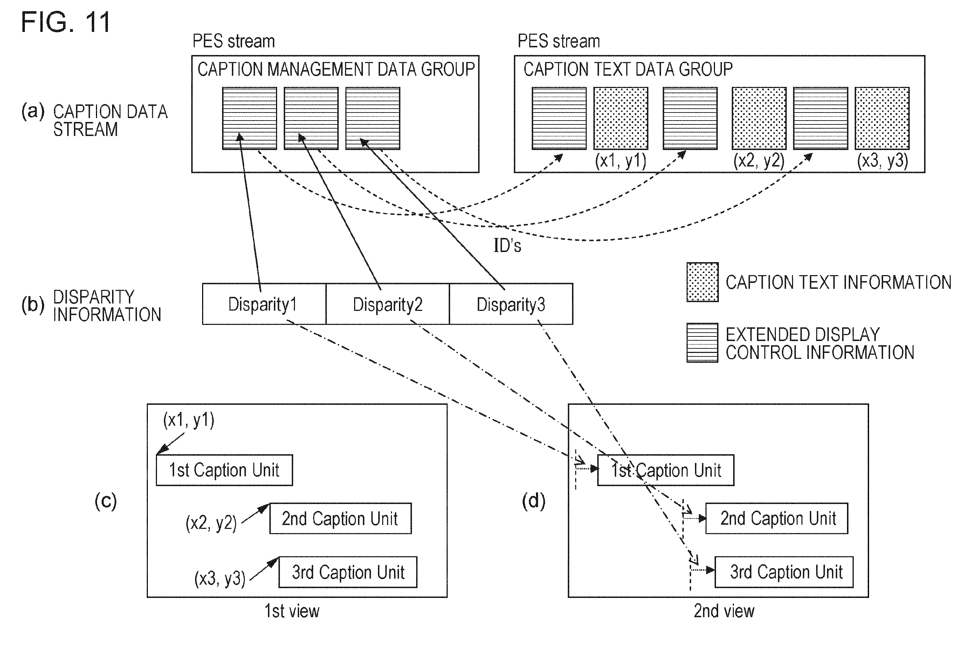

As shown in Fig. 11(b), the disparity information creating unit 131 creates individual disparity vectors corresponding to the caption units. "Disparity 1" is an individual disparity vector corresponding to "1st Caption Unit". "Disparity 2" is a disparity vector corresponding to "2nd Caption Unit". "Disparity 3" is an individual disparity vector corresponding to "3rd Caption Unit".

Fig. 11(a) illustrates a configuration example of a caption data stream (PES stream) generated at the caption encoder 133. The PES stream of the caption text data group has inserted therein caption text information of each caption unit, and extended display control information (data unit ID) correlated with each caption text information. Also, the PES stream of the caption management data group has inserted therein extended display control information (disparity information) correlated to the caption text information of each caption unit.

The extended display control information (data unit ID) of the caption text data group is necessary to correlate each extended display control information (disparity information) of the caption management data group with each caption text information of the caption text data group. In this case, disparity information serving as each extended display control information of the caption management data group is individual disparity vectors of the corresponding caption units.

Note that though not shown in the drawings, setting data of the display area of each caption unit is inserted in the PES stream of the caption management data group as caption management data (control code). The display areas of the captions units of "1st Caption Unit", "2nd Caption Unit", and "3rd Caption Unit" are indicated by (x1, y1), (x2, y2), and (x3, y3), respectively.

Fig. 11(c) illustrates a first view (1st View) upon which each caption unit (caption) has been superimposed, a right eye image for example. Also, Fig. 11(d) illustrates a second view (1st View) upon which each caption unit (caption) has been superimposed, a left eye image for example. The individual disparity vectors corresponding to the caption units are used to provide disparity between the caption units superimposed on the right eye image and the caption units superimposed on the left eye image, for example, as shown in the drawing.

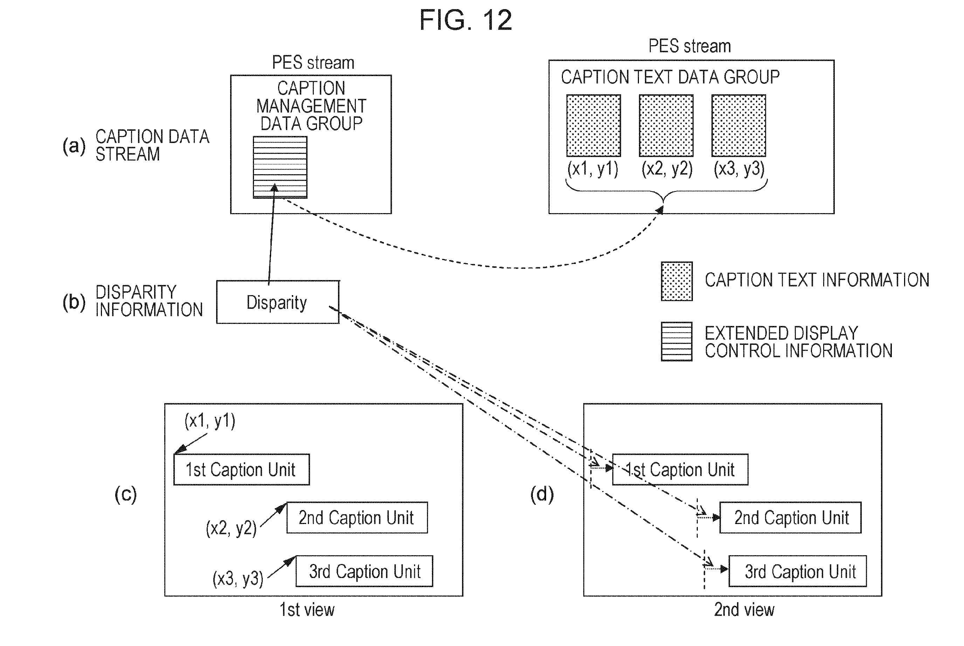

Description will be made regarding a case where a common disparity vector is to be created with the disparity information creating unit 131. Here, we will consider an example where three caption units (captions) of "1st Caption Unit", "2nd Caption Unit", and "3rd Caption Unit" are displayed on the same screen. As shown in Fig. 12(b), the disparity information creating unit 131 creates a common disparity vector "Disparity" shared by the caption units.

Fig. 12(a) illustrates a configuration example of the caption data stream (PES stream) generated at the caption encoder 133. The PES stream of the caption text data group has inserted therein caption text information of each caption unit. Also, the PES stream of the caption management data group has inserted therein extended display control information (disparity information) correlated in common to the caption text information of each caption unit. In this case, the disparity information serving as the extended display control information of the caption management data group is the common disparity vector of each caption unit.

Note that though not shown in the drawings, setting data of the display area and so forth of each caption unit is inserted in the PES stream of the caption management data group as caption management data (control code). The display areas of the captions units of "1st Caption Unit", "2nd Caption Unit", and "3rd Caption Unit" are indicated by (x1, y1), (x2, y2), and (x3, y3), respectively.

Fig. 12(c) illustrates a first view (1st View) upon which each caption unit (caption) has been superimposed, a right eye image for example. Also, Fig. 12(d) illustrates a second view (1st View) upon which each caption unit (caption) has been superimposed, a left eye image for example. The common disparity vector shared between the caption units is used to provide disparity between the caption units superimposed on the right eye image and the caption units superimposed on the left eye image, for example, as shown in the drawing.

Note that the examples in Fig. 11(c) and (d), and Fig. 12(c) and (d), involve shifting only the positions of the caption units to be superimposed on the second view (e.g., left eye image). However, there may be conceived cases of shifting only the positions of the caption units to be superimposed on the first view (e.g., right eye image), or shifting the positions of the caption units to be superimposed on both views.

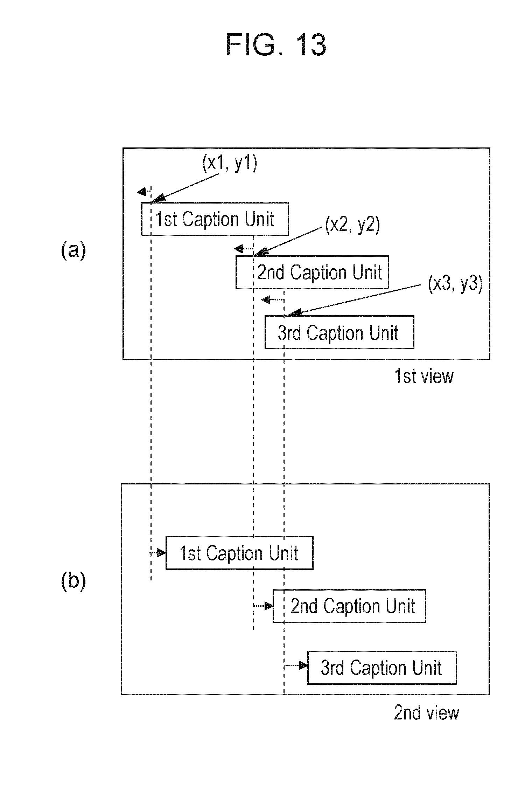

Fig. 13(a) and (b) illustrates a case of shifting the positions of the caption units to be superimposed on both the first view and second view. In this case, the shift values (offset values) D[i] of the caption units at the first view and second view are obtained as follows from the value "disparity[i]" of the disparity vector "Disparity" corresponding to the caption units.

That is to say, in the event that disparity[i] is an even number, with the first view this is obtained as "D[i] = - disparity[i]/2", and with the second view this is obtained as "D[i] = disparity[i]/2". Accordingly, the position of the caption units to be superimposed on the first view (e.g., right eye image) is shifted to the left by "disparity[i]/2". Also, the position of the caption units to be superimposed on the second view (e.g., left eye image) is shifted to the right by "disparity[i]/2".

Also, in the event that disparity[i] is an odd number, with the first view this is obtained as "D[i] = -(disparity[i]+l)/2", and with the second view this is obtained as "D[i] = (disparity[i]-1)/2". Accordingly, the position of the caption units to be superimposed on the first view (e.g., right eye image) is shifted to the left by "(disparity[i]+1)/2". Also, the position of the caption units to be superimposed on the second view (e.g., left eye image) is shifted to the right by "(disparity[i]-1)/2".

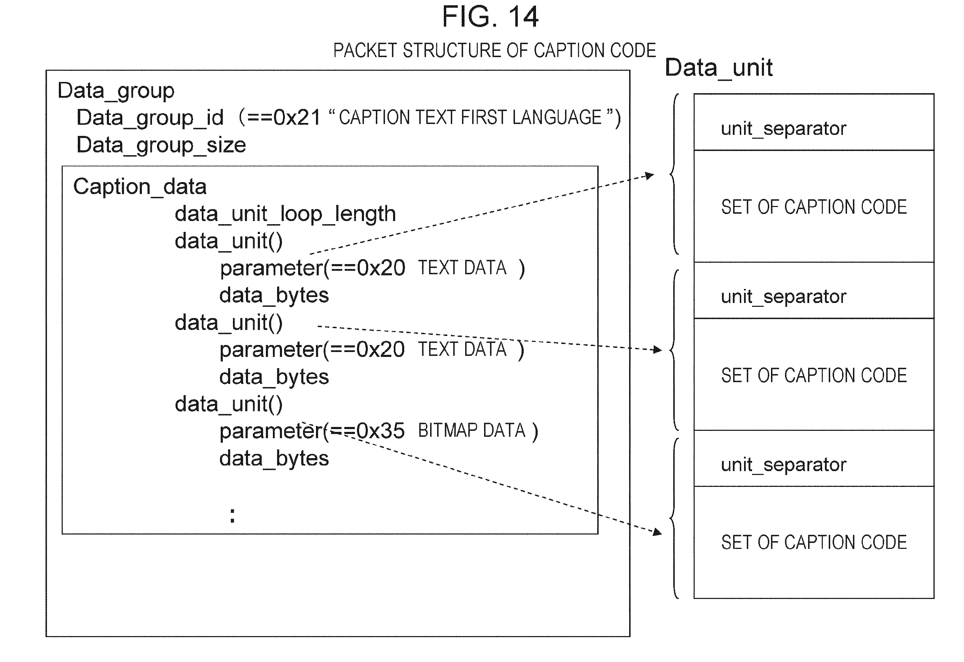

Now, the packet structure of caption code and control code will be briefly described. First, the basic packet structure of caption code included in the PES stream of a caption text data group will be described. Fig. 14 illustrates the packet structure of caption code. "Data_group_id" indicates a data group identification, and here indicates that this is a caption text data group. Note that "Data_group_id" which indicates a caption text data group further identifies language. For example, "Data_group_id==0x21" indicates that this is a caption text data group, and is caption text (first language).

"Data_group_size" indicates the number of bytes of the following data group data. In the event of a caption text data group, this data group data is caption text data (caption_data). One data unit or more is disposed in the caption text data. Each data unit is separated by data unit separator code (unit_parameter). Caption code is disposed as data unit data (data_unit_data) within each data unit.

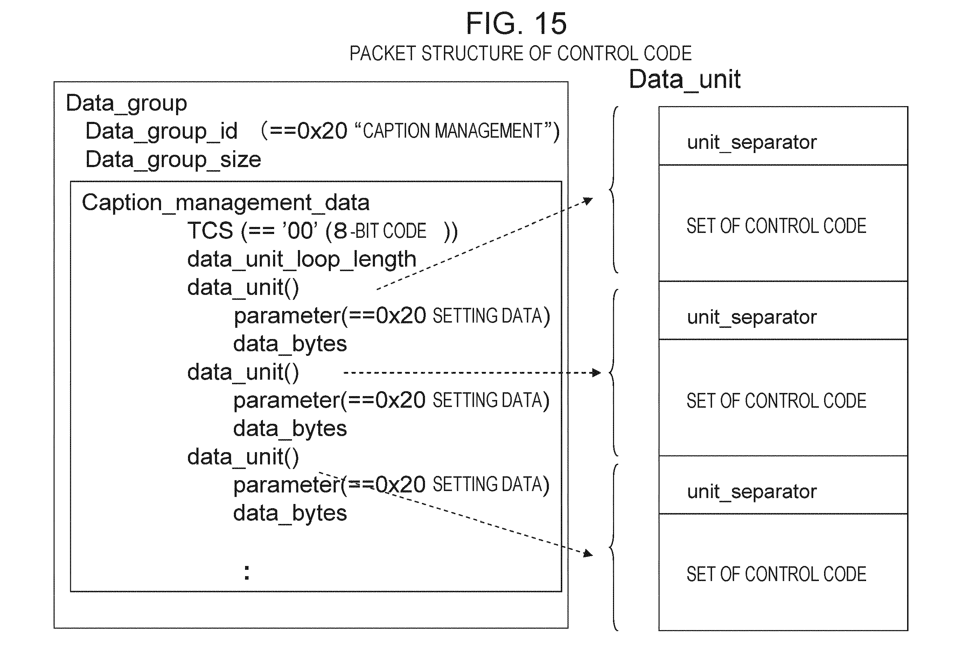

Next, description will be made regarding the packet structure of control code. Fig. 15 illustrates the packet structure of control code included in the PES stream of a caption management data group. "Data_group_id" indicates data group identification. Here this indicates that this is a caption management data group, and is "Data_group_id==0x20". "Data_group_size" indicates the number of bytes of the following data group data. In the event of a caption management data group, this data group data is caption management data (caption_management_data).

One data unit or more is disposed in the caption management data. Each data unit is separated by data unit separator code (unit_parameter). Control code is disposed as data unit data (data_unit_data) within each data unit. With this embodiment, the value of a disparity vector is provided as 8-bit code. "TCS" is 2-bit data, indicating the character encoding format. Here, "TCS == 00" is set, indicating 8-bit code.

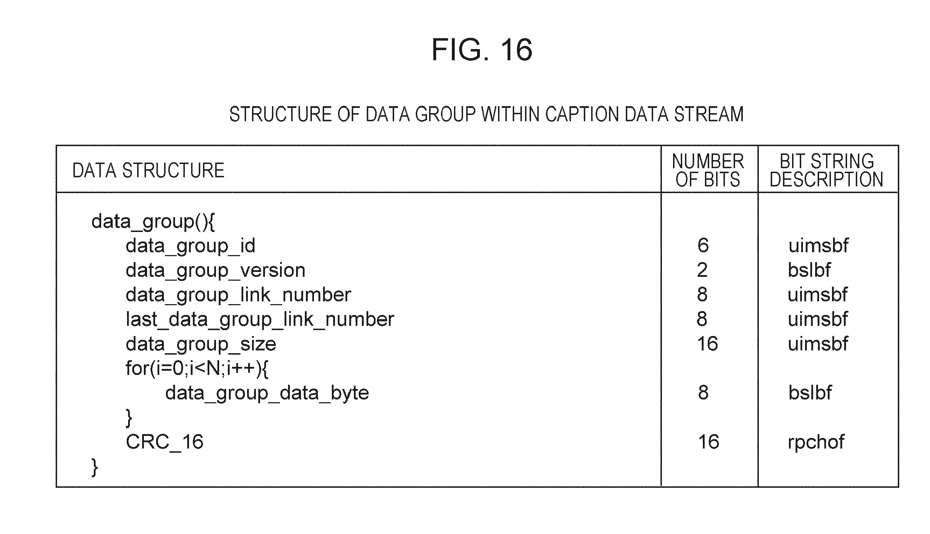

Fig. 16 illustrates the structure of a data group within a caption data stream (PES stream). The 6-bit field of "data_group_id" indicates the data group identification, identifying the type of caption management data or caption text data. The 16-bit field of "data_group_size" indicate the number of bytes of the following data group data in this data group field. The data group data is stored in "data_group_data_byte". "CRC_16" is 16-bit cyclic redundancy check code. The encoding section of this CRC code is from the head of the "data_group_id" to the end of the "data_group_data_byte".

In the event of a caption management data group, the "data_group_data_byte" in the data group structure in Fig. 16 is caption management data (caption_management_data). Also, in the event of a caption text data group, the "data_group_data_byte" in the data group structure in Fig. 16 is caption data (caption_data).

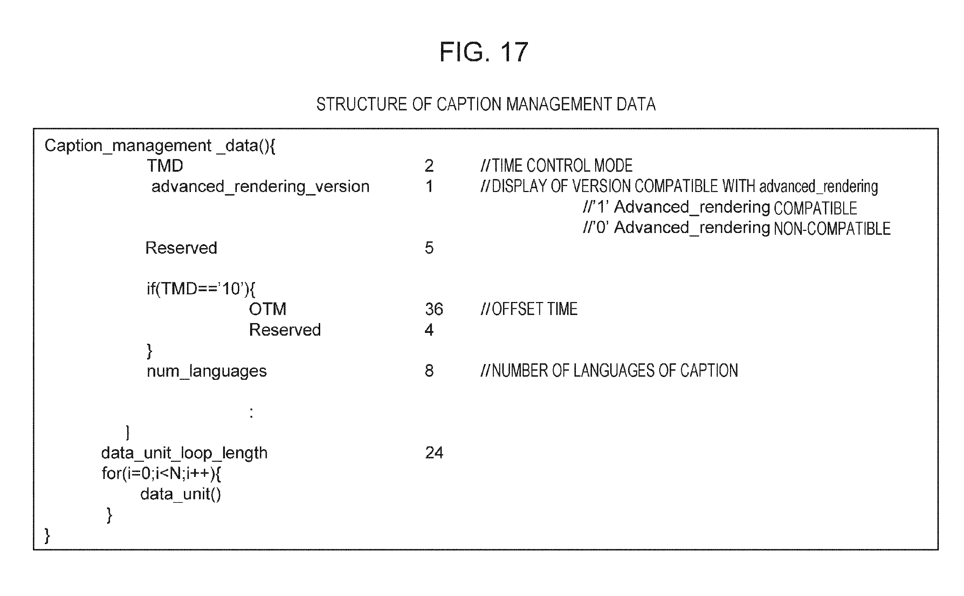

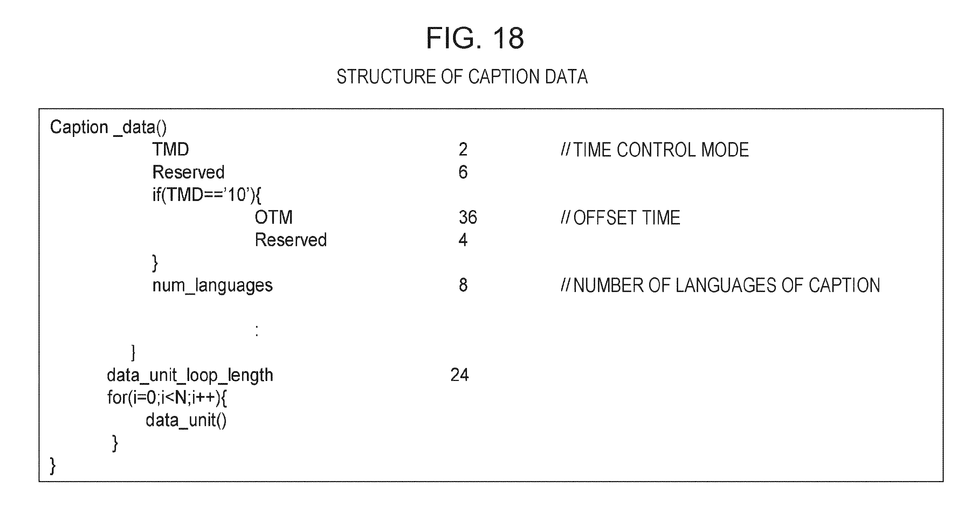

Fig. 17 is a diagram schematically illustrating the structure of caption management data. "advanced_rendering_version" is 1-bit flag information indicating whether or not compatible with extended display of caption, which is newly defined with this embodiment. At the reception side, whether or not compatible with extended display of caption can be easily comprehended, based on the flag information situated in the layer of management information in this way. The 24-bit field of "data_unit_loop_length" indicates the number of bytes of the following data unit in this caption management data field. The data unit to be transmitted with this caption management data field is stored in "data_unit". Fig. 18 is a diagram schematically illustrating the structure of caption data. This is of the same structure as the above-described caption management data, excluding cases where there is no "advanced_rendering_version".

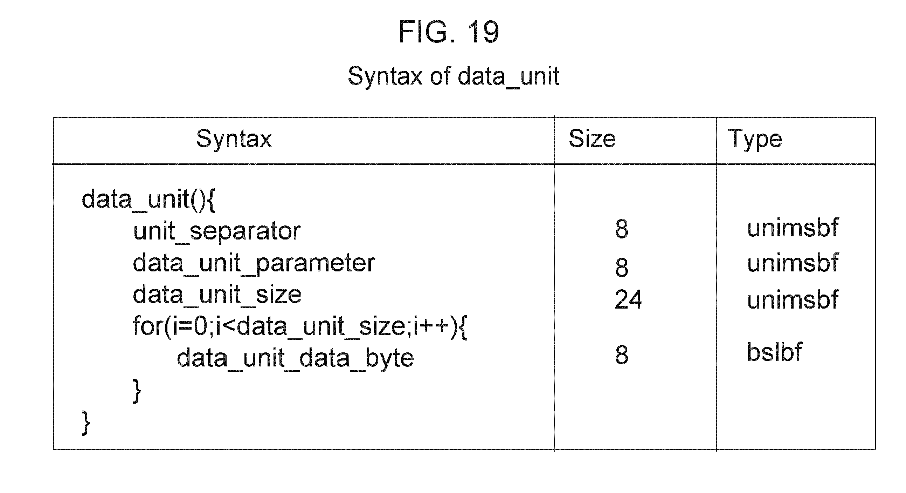

Fig. 19 is a diagram illustrating the structure (Syntax) of a data unit (data_unit) included in a caption data stream. The 8-bit field of "unit_separator" indicates data unit separator code, and is set to "0x1F". The 8-bit field of "data_unit_parameter" is a data unit parameter for identifying the type of data unit.

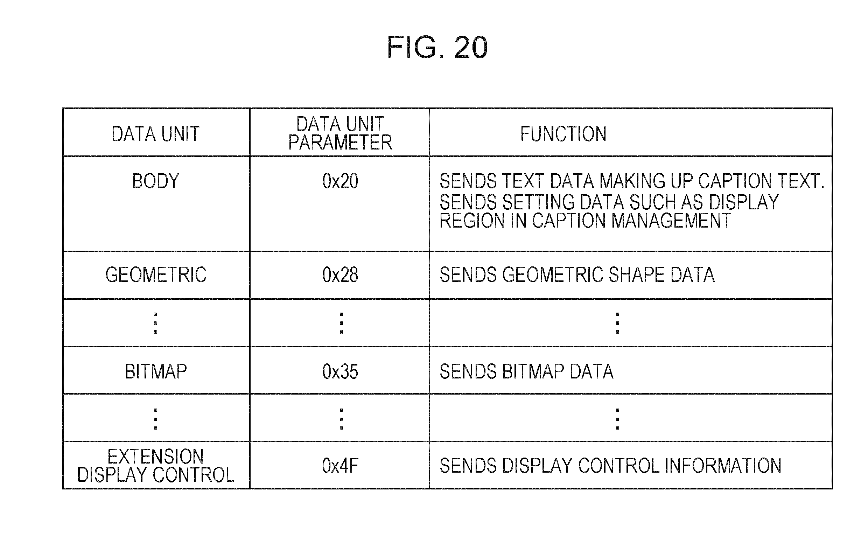

Fig. 20 is a diagram illustrating the types of data units, and the data unit parameters and functions thereof. For example, the data unit parameter indicating the data unit of the body is set to "0x20". Also, for example, the data unit parameter indicating a geometric data unit is set to "0x28". Also, for example, the data unit parameter indicating a bitmap data unit is set to "0x35". In this embodiment, a data unit of extended display control for storing display control information (extended display control information) is newly defined, and the data unit parameter indicating this data unit is set to, for example, "0x4F".

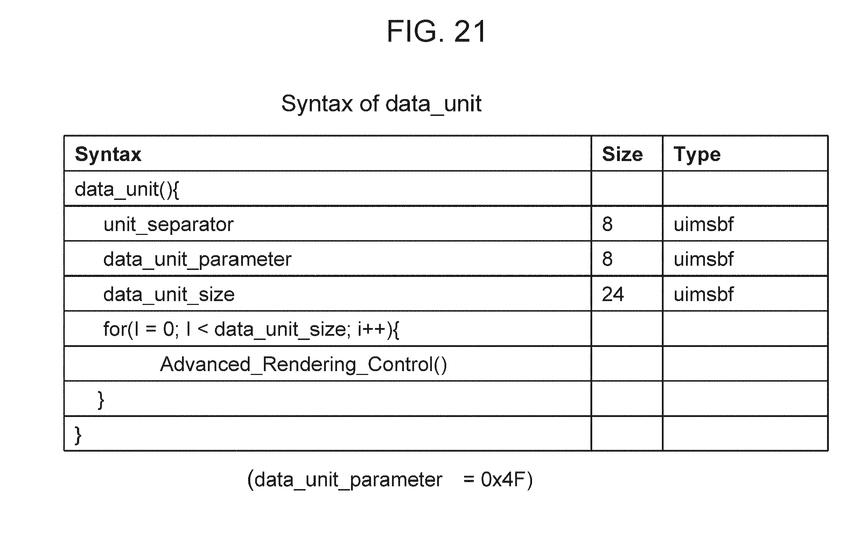

The 24-bit field of "data_unit_size" indicates the number of bytes of the following data unit data in this data unit field. The data unit data is stored in "data_unit_data_byte". Fig. 21 is a diagram illustrating the structure (Syntax) of a data unit (data_unit) for extended display control. In this case, the data unit parameter is "0x4F", and the display control information is stored in the "Advanced_Rendering_Control" serving as the "data_unit_data_byte".

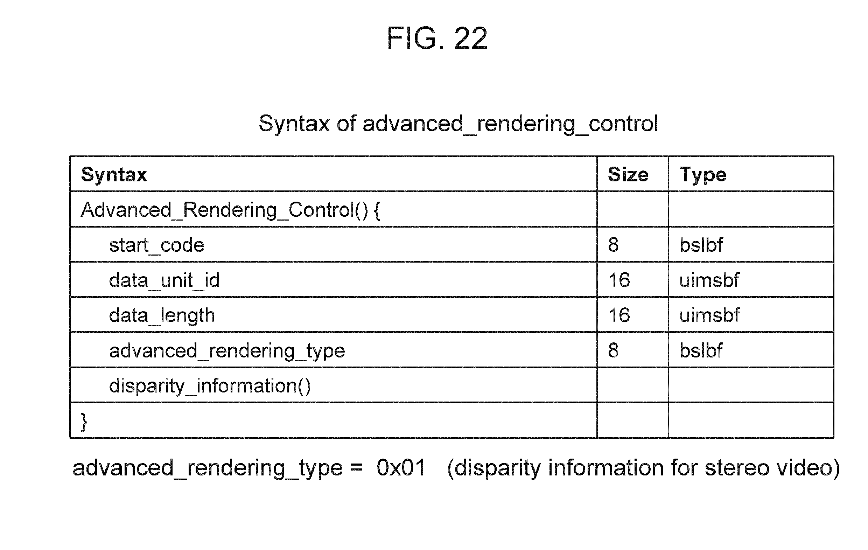

Fig. 22 is a diagram illustrating the structure (Syntax) of "Advanced_Rendering_Control". This Fig. 22 illustrates a structure in a case of inserting stereo video disparity information as display control information. That is to say, this Fig. 22 illustrates the structure of "Advanced_Rendering_Control" in a data unit (data_unit) of extended display control included in a caption management data group.

The 8-bit field of "start_code" indicates the start of "Advanced_Rendering_Control". The 16-bit field of "data_unit_id" indicates the data unit ID. The 16-bit field of "data_length" indicates the number of data bytes following in this advanced rendering control field. The 8-bit field of "Advanced_rendering_type" is the advanced rendering type specifying the type of the display control information. Here, this indicates that the data unit parameter is set to "0x01" for example, and the display control information is "stereo video disparity information". The disparity information is stored in "disparity_information".

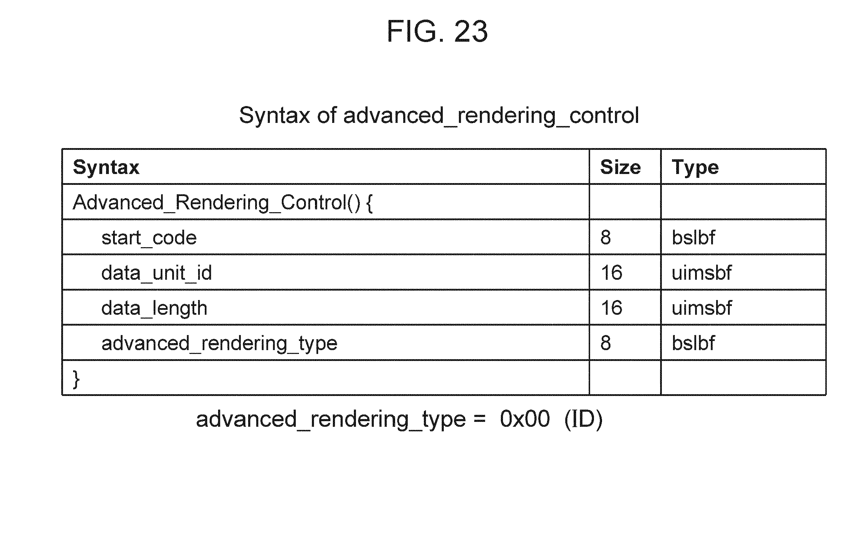

Fig. 23 also illustrates the structure (Syntax) of "Advanced_Rendering_Control". Fig. 23 illustrates the structure in the event of inserting a data unit ID as display control information. That is to say, this Fig. 23 illustrates the structure of "Advanced_Rendering_Control" within in a data unit (data_unit) of extended display control included in a caption data group.

The 8-bit field of "start_code" indicates the start of "Advanced_Rendering_Control". The 16-bit field of "data_unit_id" indicates the data unit ID. The 16-bit field of "data_length" indicates the number of data bytes following in this advanced rendering control field. The 8-bit field of "Advanced_rendering_type" is the advanced rendering type specifying the type of the display control information. Here, the data unit parameter is "0x00" for example, indicating that the display control information is "data unit ID".

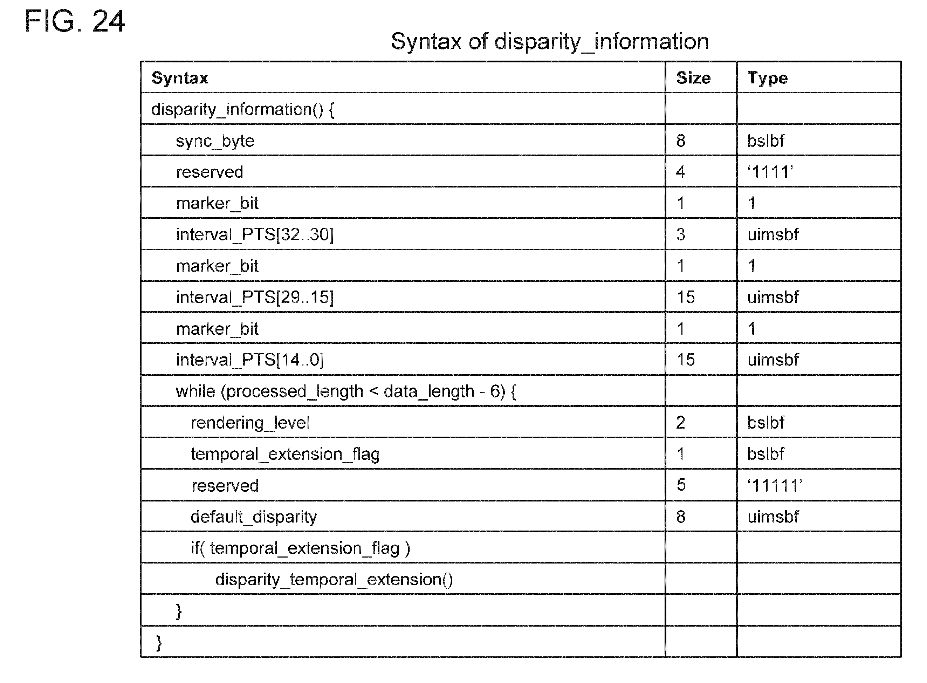

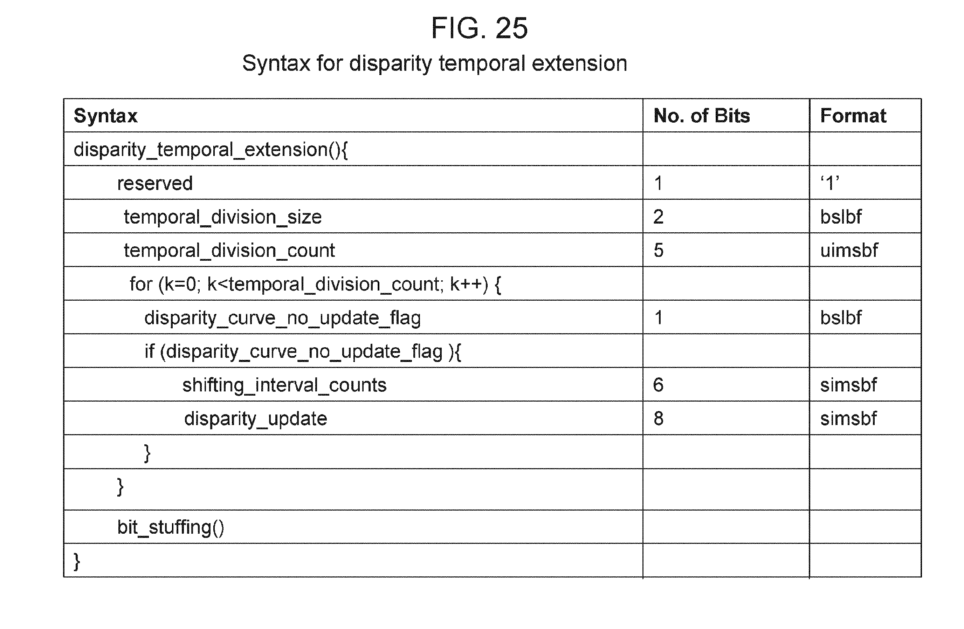

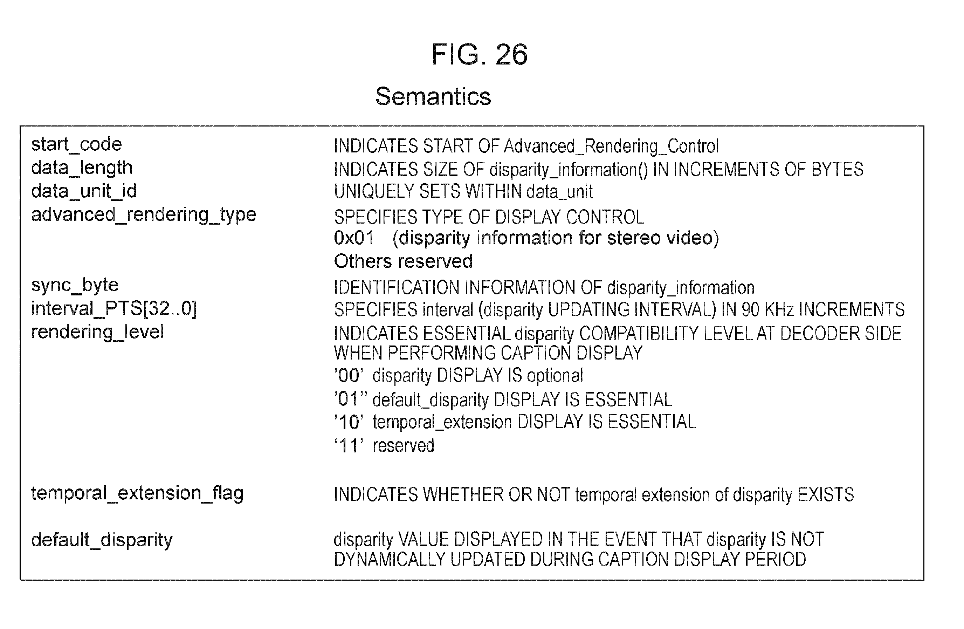

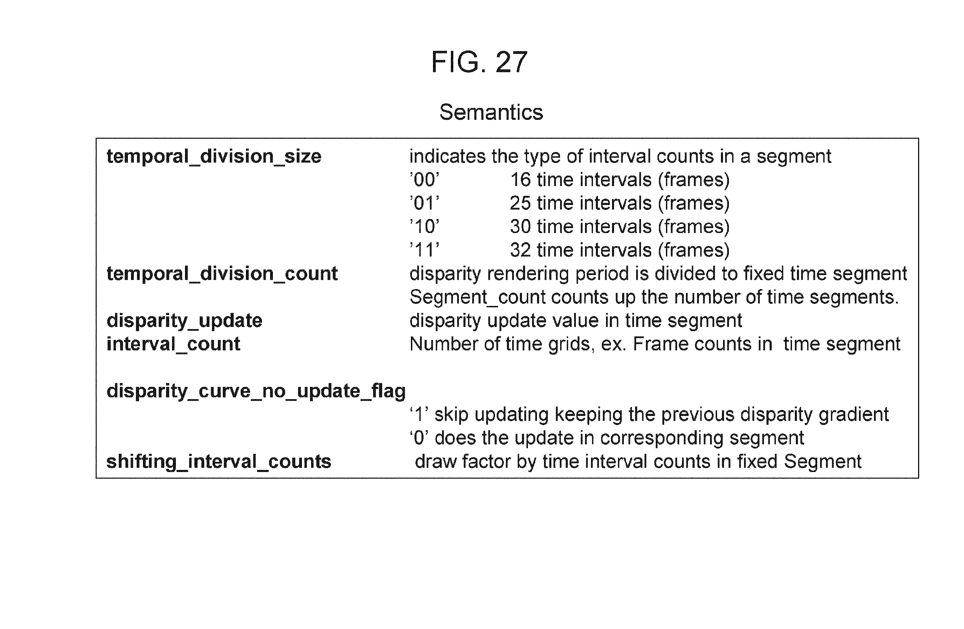

Note that Fig. 26 and Fig. 27 illustrate primary data stipulation contents in the structure of "Advanced_Rendering_Control" described above, and further in the structure of "disparity_information" in the later-described Fig. 24 and Fig. 25.

Fig. 24 and Fig. 25 illustrate a structure (Syntax) of "disparity_information" in "Advanced_Rendering_Control" within a extended display control data unit (data_unit) included in a caption management data group. The 8-bit field of "sync_byte" is identification information of "disparity_information", and indicates the start of this "disparity_information". "interval_PTS[32..0]" specifies the frame cycle (the interval of one frame) in updating frame intervals of the disparity information (disparity), in 90 KHz increments. That is to say, " interval_PTS[32..0]" expresses a value of the frame cycle measured with a 90 KHz in a 33-bit length.

By instructing the frame cycle with "interval_PTS[32..0]" in the disparity information, the updating frame intervals of disparity information intended at the transmission side can be correctly transmitted to the reception side. In the event that this information is not appended, the video frame cycle, for example, is referenced at the reception side.

"rendering_level" indicates the correspondence level of disparity information (disparity) essential at the reception side (decoder side) for displaying captions. "00" indicates that 3-dimensional display of captions using disparity information is optional (optional). "01" indicates that 3-dimensional display of captions using disparity information used in common within the caption display period (default_disparity) is essential. "10" indicates that 3-dimensional display of captions using disparity information sequentially updated within the caption display period (disparity_update) is essential.

"temporal_extension_flag" is 1-bit flag information indicating whether or not there exists disparity information sequentially updated within the caption display period (disparity_update). In this case, "1" indicates that this exists, and "0" indicates that this does not exist. The 8-bit field of "default_disparity" indicates default disparity information. This disparity information is disparity information in the event of not being updated, i.e., disparity information used in common within the caption display period.

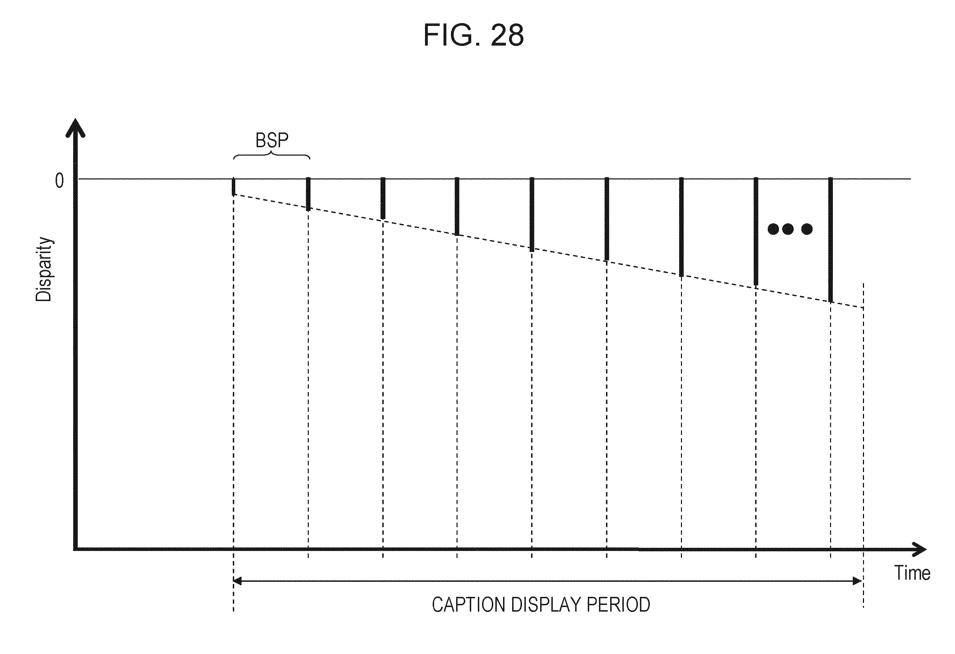

In the event that "temporal_extension_flag" is "1", the disparity information has "disparity_temporal_extension()". Basically, disparity information to be updated each base segment period (BSP: Base Segment Period) is stored here. Fig. 28 illustrates an example of updating disparity information of each base segment period (BSP). Here, a base segment period means updating frame intervals. As can be clearly understood from this drawing, the disparity information that is sequentially updated within the caption display period is made up from the disparity information of the first frame in the caption display period, and disparity information of frames of each subsequent base segment period (updating frame interval).

The 2-bit field of "temporal_division_size" indicates the number of frames included in the base segment period (updating frame intervals). "00" indicates that this is 16 frames. "01" indicates that this is 25 frames. "10" indicates that this is 30 frames. Further, "11" indicates that this is 32 frames.

"temporal_division_count" indicates the number of base segments included in the caption display period. "disparity_curve_no_update_flag" is 1-bit flag information indicating whether or not there is updating of disparity information. "1" indicates that updating of disparity information at the edge of the corresponding base segment is not to be performed, i.e., is to be skipped, and "0" indicates that updating of disparity information at the edge of the corresponding base segment is to be performed.

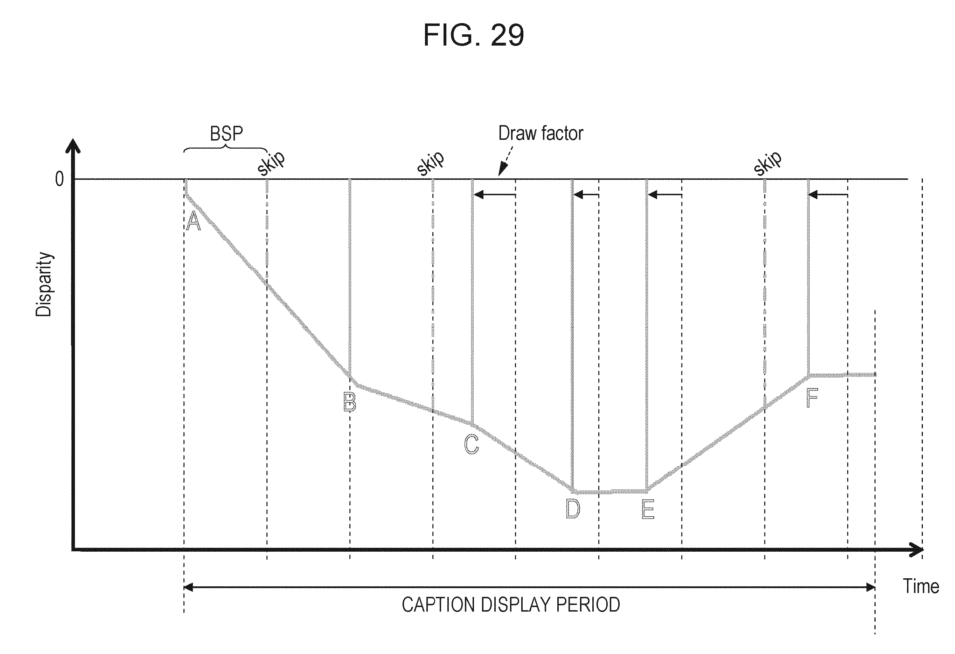

Fig. 29 illustrates a configuration example of disparity information for each base segment period (BSP). In the drawing, updating of disparity information at the edge of a base segment where "skip" has been appended is not performed. Due to the presence of this flag information, in the event that the period where change of disparity information in the frame direction is the same continues for a long time, transmission of the disparity information within the period can be omitted by not updating the disparity information, thereby enabling the data amount of disparity information to be suppressed.

In the event that "disparity_curve_no_update_flag" is "0" and updating of disparity information is to be performed, the disparity information includes "shifting_interval_counts" of the corresponding base segment. Also, in the event that "disparity_curve_no_update_flag" is "0" and updating of disparity information is to be performed, the disparity information includes "disparity_update". The 6-bit field of "shifting_interval_counts" indicates the draw factor (Draw factor) for adjusting the base segment period (updating frame intervals), i.e., the number of subtracted frames.

In the updating example of disparity information for each base segment period (BSP) in Fig. 29, the base segment period is adjusted for the updating timings for the disparity information at points-in-time C through F, by the draw factor (Draw factor). Due to the presence of this adjusting information, the base segment period (updating frame intervals) can be adjusted, and the change in the temporal direction (frame direction) of the disparity information can be informed to the reception side more accurately.

Note that for adjusting the base segment period (updating frame intervals), adjusting in the direction of lengthening by adding the number of frames can be conceived, besides adjusting in the direction of shortening by the number of subtracting frames as described above. For example, adjusting in both directions can be performed by making the 6-bit field of "shifting_interval_counts" to be an integer with a sign.

The 8-bit field of "disparity_update" indicates disparity information of the corresponding base segment. Note that "disparity_update" where k = 0 is the initial value of disparity information sequentially updated at updating frame intervals in the caption display period, i.e., the disparity information of the first frame in the caption display period.

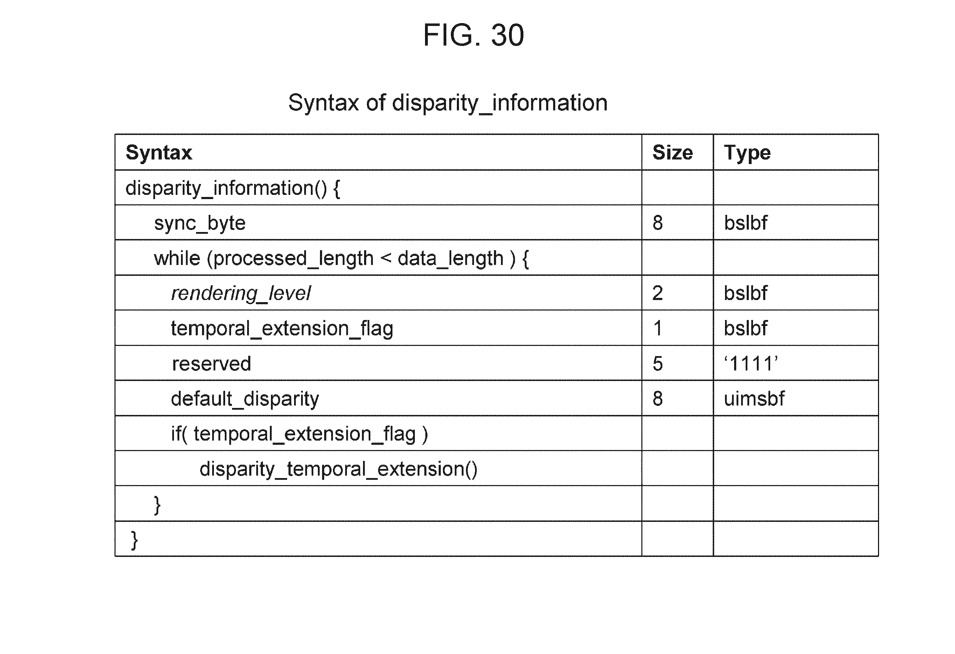

Note that " interval_PTS[32..0]" is appended to the structure (Syntax) of "disparity_information" in Fig. 24 described above. However, a structure (Syntax) of "disparity_information" without "interval_PTS[32..0]" appended thereto is also conceivable. In this case, the structure of "disparity_information" is as shown in Fig. 30.

Returning to Fig. 2, the video encoder 113 subjects the stereoscopic image data supplied from the data extracting unit 130 to encoding such as MPEG4-AVC, MPEG2, VC-1, or the like, and a video elementary stream is generated. The audio encoder 117 subjects the audio data supplied from the data extracting unit 130 to encoding such as MPEG-2 Audio AAC, or the like, generating an audio elementary stream.

The multiplexer 122 multiplexes the elementary streams output from the video encoder 113, audio encoder 117, and caption encoder 133. This multiplexer 122 outputs the bit stream data (transport stream) BSD as transmission data (multiplexed data stream).

The operations of the transmission data generating unit 110 shown in Fig. 2 will be described in brief. Stereoscopic image data output from the data extracting unit 130 is supplied to the video encoder 113. The video encoder 113 subjects the this stereoscopic image data to encoding such as MPEG4-AVC, MPEG2, VC-1, or the like, and a video elementary stream including this encoded video data is generated. This video elementary stream is supplied to the multiplexer 122.

Also, at the caption generating unit 132, ARIB format caption data is generated. This caption data is supplied to the caption encoder 133. At this caption encoder 133, a caption elementary stream including the caption data generated at the caption generating unit 132 (caption data stream) is generated. This caption elementary stream is supplied to the multiplexer 122.

The disparity vector for each pixel (pixel) output from the data extracting unit 130 is supplied to the disparity information creating unit 131. At this disparity information creating unit 131, disparity vectors (horizontal direction disparity vectors) corresponding to a predetermined number of caption units (captions) displayed on the same screen are created by downsizing processing. In this case, the disparity information creating unit 131 creates disparity vectors for each caption unit (individual disparity vectors) or a disparity vector (common disparity vector) common to all caption units.

The disparity vectors created at the disparity information creating unit 131 are supplied to the caption encoder 133. At the caption encoder 133, the disparity vectors are included in the caption data stream (see Fig. 11 through Fig. 12). In this case, with the caption data stream, caption data of each caption unit displayed on the same screen is inserted in the caption text data group as caption text data (caption code). Also, with the caption data stream, disparity vectors (disparity information) are inserted as caption management data (control code) for the caption management data group. In this case, the disparity vector is inserted into a data unit of extended display control for sending the display control information that has been newly defined (see Fig. 21, Fig. 23 through Fig. 25, Fig. 30).

Also, the audio data output from the data extracting unit 130 is supplied to the audio encoder 117. At the audio encoder 117, the audio data is subjected to encoding such as MPEG-2 Audio AAC, or the like, generating an audio elementary stream including the encoded audio data. This audio elementary stream is supplied to the multiplexer 122.

As described above, the multiplexer 122 is supplied with the elementary streams from the video encoder 113, audio encoder 117, and caption encoder 133. This multiplexer 122 packetizes and multiplexes the elementary streams supplied from the encoders, thereby obtaining a bit stream data (transport stream) BSD as transmission data.

As described above, with the transmission data generating unit 110 shown in Fig. 2, the bit stream data BSD output from the multiplexer 122 is a multiplexed data stream having a video data stream and caption data stream. The video data stream includes stereoscopic image data. Also, the caption data stream includes ARIB format caption (caption unit) data and disparity vectors (disparity information).

Also, disparity vectors (disparity information) are inserted in the caption data stream as management information of caption data, and the caption data and disparity information are correlated. Accordingly, at the reception side (set top box 200), suitable disparity can be provided to the caption units (captions) superimposed on the left eye image and right eye image, using the corresponding disparity vectors (disparity information). Accordingly, regarding caption units (captions) being displayed, consistency in perspective as to the objects in the image can be maintained in an optimal state.

Also, with the transmission data generating unit 110 shown in Fig. 2, the above-described caption data stream has newly-defined extended display control data units for sending display control information. Disparity vectors (disparity information) are also inserted in the extended display control data units. Accordingly, stable transmission of disparity information, without affecting the already-existing 8-bit-code code system, is enabled in the ARIB format. That is to say, backward compatibility can be guaranteed.

That is to say, it is possible to make an extended definition of disparity information (disparity vector) in a 8-bit-code code table. However, attempting to realize complex control including temporal direction updating makes the configuration within the 8-bit-code code table to be complicated, and also, there is concern of adverse effects on stable operation of the already-existing code system due to the legacy problem for devices regarding which implementation is to be performed.

On the other hand, disparity information can be sent as a metadata stream independent from the caption data stream. However, in addition to linking the object caption data within the caption data stream and the disparity information within the external data stream, the mechanism for managing the synchronized relation thereof would likely become complicated.

That which is situated intermediately between cases of the above-described 8-bit code and sending with an external data stream, is a data unit which is on the inner side of the caption data stream and exists within the caption management data but is situated at a position on the outer side of 8-bit code. Accordingly, with the present invention, the parameter types of caption management data are newly extended, so that a data unit for extended display control to send display control information is newly defined, and disparity information is sent by this data unit.

In this case, backward compatibility is ensured, disparity rendering that caption data is linked as caption management data, so the spatial and temporal synchronization thereof can be guaranteed, and also the already-existing 8-bit-code code system is not affected. Also, with the newly-defined data unit (transmission region), new meta information such as disparity information and the like can be transmitted with freedom. Note that distinction of each information is performed with 8-bit fields of "Advanced_rendering_type", as described above (see Fig. 20).

Also, with the transmission data generating unit 110 shown in Fig. 2, disparity information used in common within the caption display period (see the "default_disparity" in Fig. 24) is inserted into the newly-defined extended display control data unit. Also, disparity information sequentially updated within the caption display period (see the "disparity_update" in Fig. 25) can be inserted into this data unit. Also, flag information indicating the existence of disparity information sequentially updated within the caption display period (see the "temporal_extension_flag" in Fig. 24) is inserted into this extended display control data unit.

Accordingly, whether to transmit only disparity information used in common within the caption display period, or further to transmit disparity information sequentially updated within the caption display period, can be selected. By transmitting the disparity information sequentially updated within the caption display period, disparity to be provided to superimposing information at the reception side (set top box 200) can be dynamically changed in conjunction with change in the contents of the image.

Also, with the transmission data generating unit 110 shown in Fig. 2, disparity information sequentially updated within the caption display period to be inserted into the extended display control data unit is basically disparity information for each base segment period (BSP) (see Fig. 28). That is to say, this disparity information is made up of disparity information of the first frame in the caption display period, and disparity information of frames in each subsequent base segment period. Also, the base segment period (updating frame period) can be optionally set (see the "temporal_division_size" in Fig. 25).

Accordingly, in the event that change of disparity information in the temporal direction (frame direction) is great, for example, the change in the temporal direction of the disparity information can be more correctly communicated to the reception side (set top box 200) by shortening the updating frame interval. Also, in the event that the change of disparity information in the temporal direction is small, for example, the data amount of disparity information can be suppressed by lengthening the updating frame interval.

Also, with the transmission data generating unit 110 shown in Fig. 2, the following flag information is added in the event that disparity information sequentially updated within the caption display period is to be inserted to the extended display control data unit. This flag information is flag information indicating whether or not there is updating of the disparity information (see the "disparity_curve_no_update_flag" in Fig. 25). This flag information is added to each of the frames for each base segment period (updating frame interval). In this case, if periods in which change of disparity information in the temporal direction is similar are continuous, transmission of disparity information within the period can be omitted using this flag information (see the edge of the base segment to which "skip" in Fig. 29 has been added), thereby enabling the data amount of disparity information to be suppressed.

Also, with the transmission data generating unit 110 shown in Fig. 2, the following adjustment information is added in the event that disparity information sequentially updated within the caption display period is to be inserted to the extended display control data unit. This adjustment information is adjustment information for adjusting the base segment period (updating frame interval) (see the "shifting_interval_counts" in Fig. 25). In this case, the base segment period can be optionally adjusted in the direction of being shorter or in the direction of being longer, based on the adjustment information. Accordingly, the change in the temporal direction (frame direction) of the disparity information can be more correctly communicated to the reception side (set top box 200) (see adjustment by "Draw factor" in Fig. 29).

Also, with the transmission data generating unit 110 shown in Fig. 2, information specifying frame cycles is inserted to the extended display control data unit (see "interval_PTS[32..0]" in Fig. 24). Accordingly, the base segment period (updating frame interval) of disparity information intended at the transmission side (broadcasting station 100) can be correctly communicated to the reception side (set top box 200). In the event that this information is not added, the video frame cycle, for example, is referenced at the reception side.

Also, with the transmission data generating unit 110 shown in Fig. 2, information indicating the correspondence level of disparity information (disparity) essential at the reception side (decoder side) at the time of caption display is included in the extended display control data unit (see "rendering_level" in Fig. 24). In this case, correspondence as to the disparity information can be controlled at the reception side due to this information.

Also, with the transmission data generating unit 110 shown in Fig. 2, 1-bit flag information indicating whether or not compatible with extended display of caption (see "advanced_rendering_version" in Fig. 17) is inserted to the layer of caption management data. At the reception side, whether or not compatible with extended display of caption can be readily comprehended based on flag information situated in the management information layer in this way.

### [Description of Set Top Box]

Returning to Fig. 1, the set top box 200 receives bit stream data (transport stream) BSD transmitted over broadcast waves from the broadcasting station 100. This bit stream data BSD includes stereoscopic image data including left eye image data and right eye image data, and audio data. The bit stream data BSD also includes caption data for caption units, and further includes disparity vectors (disparity information) for providing disparity to the caption units.

The set top box 200 includes a bit stream processing unit 201. This bit stream processing unit 201 extracts stereoscopic image data, audio data, caption data for caption units, disparity vectors, and so forth, from the bit stream data BSD. This bit stream processing unit 201 uses the stereoscopic image data, caption data for caption units, and so forth, to generate left eye image and right eye image data with captions superimposed.

In this case, data for left eye captions and right eye captions to be superimposed on the left eye image and right eye image respectively, can be generated, based on the disparity vector and caption data of caption units. Here, a left eye caption and a right eye caption are the same caption. However, the superimposing positions within the image for the left eye caption and right eye caption are shifted in the horizontal direction, by an amount equivalent to a disparity vector. Thus, disparity is provided between the left eye captions and right eye captions, whereby the position of recognition of the caption is made to be in the foreground of the image.

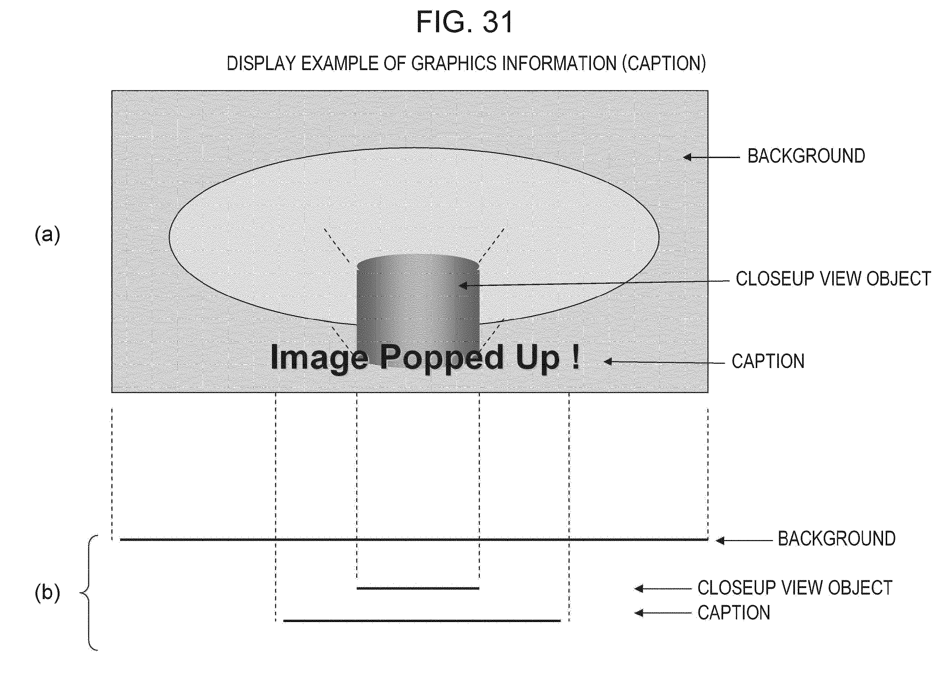

Fig. 31(a) illustrates a display example of a caption unit (caption) on an image. This display example is an example wherein a caption is superimposed on an image made up of background and a closeup object. Fig. 31(b) illustrates perspective of the background, closeup object, and caption, of which the caption is recognized as the closest.

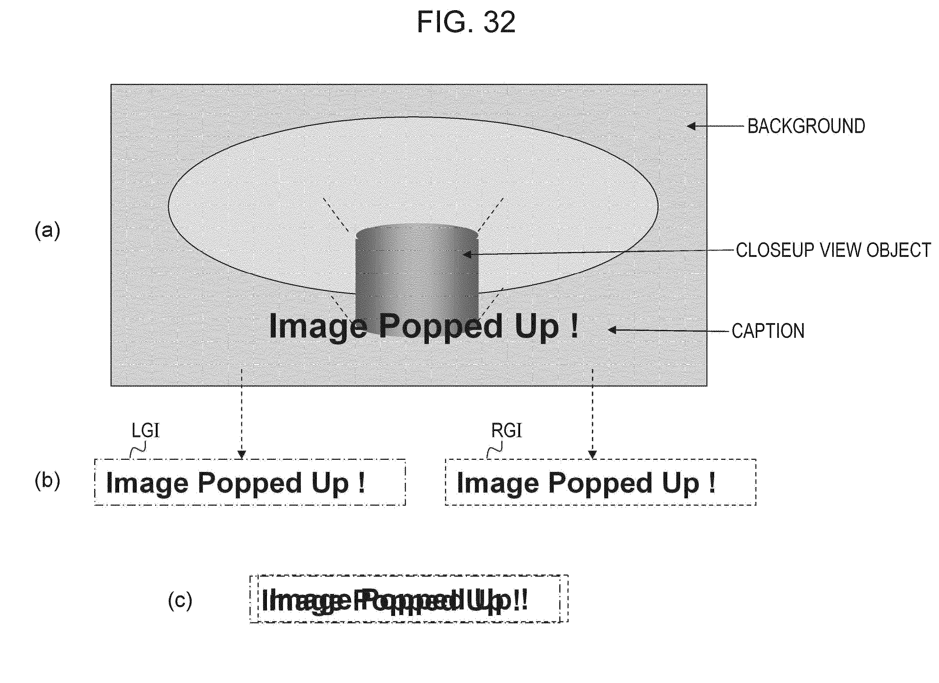

Fig. 32(a) illustrates a display example of a caption unit (caption) on an image, the same as with Fig. 31(a). Fig. 32(b) illustrates a left eye caption LGI to be superimposed on a left eye image and a right eye caption RGI to be superimposed on a right eye image. Fig. 32(c) illustrates that disparity is given between the left eye caption LGI and the right eye caption RGI so that the caption will be recognized as being closest.

### [Configuration Example of Set Top Box]

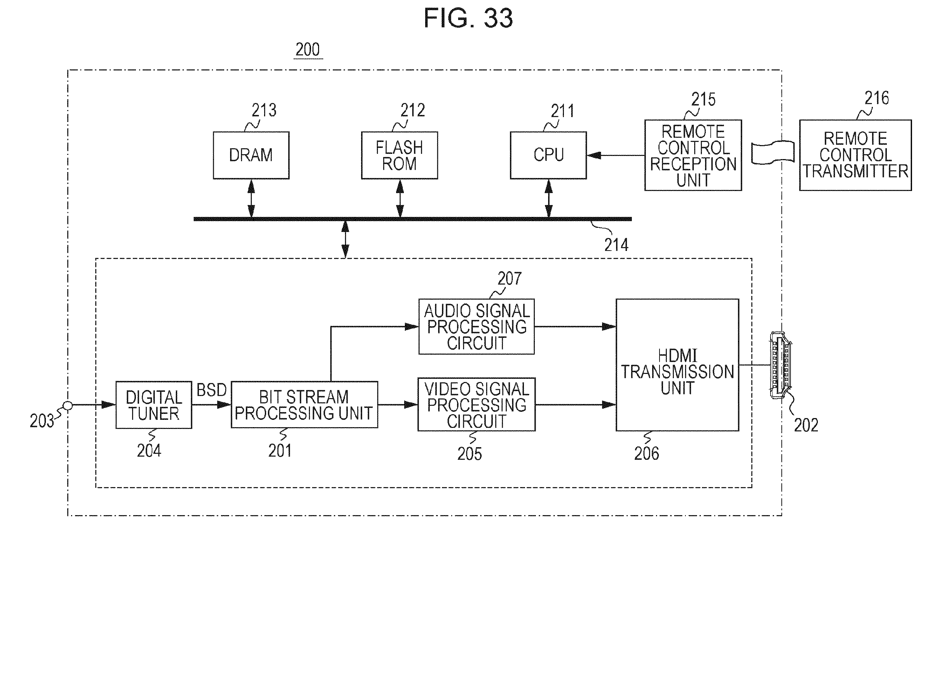

A configuration example of the set top box 200 will be described. Fig. 33 illustrates a configuration example of the set top box 200. This set top box 200 includes a bit stream processing unit 201, an HDMI terminal 202, an antenna terminal 203, a digital tuner 204, a video signal processing circuit 205, an HDMI transmission unit 206, and an audio signal processing circuit 207. Also, this set top box 200 includes a CPU 211, flash ROM 212, DRAM 213, an internal bus 214, a remote control reception unit 215, and a remote control transmitter 216.

The antenna terminal 203 is a terminal for inputting television broadcasting signal received at a reception antenna (not illustrated). The digital tuner 204 processes the television broadcasting signal input to the antenna terminal 203, and outputs predetermined bit stream data (transport stream) BSD corresponding to the user's selected channel.

The bit stream processing unit 201 extracts stereoscopic image data, audio data, caption data for caption units, disparity vectors, and so forth, from the bit stream data BSD, as described above. This bit stream processing unit 201 synthesizes the data of the left eye captions and right eye captions as to the stereoscopic image data to generate stereoscopic image data for display and output. The bit stream processing unit 201 also outputs audio data. Detailed configuration of the bit stream processing unit 201 will be described later.

The video signal processing circuit 205 subjects the stereoscopic image data output from the bit stream processing unit 201 to image quality adjustment processing and so forth according to need, and supplies the stereoscopic image data after processing thereof to the HDMI transmission unit 206. The audio signal processing circuit 207 subjects the audio data output from the bit stream processing unit 201 to audio quality adjustment processing and so forth according to need, and supplies the audio data after processing thereof to the HDMI transmission unit 206.

The HDMI transmission unit 206 transmits, by communication conforming to HDMI, data of baseband image (video) and audio from the HDMI terminal 202. In this case, since the data is transmitted by an HDMI TMDS channel, the image data and audio data are subjected to packing, and are output from the HDMI transmission unit 206 to the HDMI terminal 202.

The CPU 211 controls the operation of each unit of the set top box 200. The flash ROM 212 performs storage of control software, and storage of data. The DRAM 213 configures the work area of the CPU 211. The CPU 211 loads the software and data read out from the flash ROM 212 to the DRAM 213, and starts up the software to control each unit of the set top box 200.

The remote control reception unit 215 receives a remote control signal (remote control code) transmitted from the remote control transmitter 216, and supplies to the CPU 211. The CPU 211 controls each unit of the set top box 200 based on this remote control code. The CPU 211, flash ROM 212, and DRAM 213 are connected to the internal bus 214.

The operation of the set top box 200 will be described in brief. The television broadcasting signal input to the antenna terminal 203 is supplied to the digital tuner 204. With this digital tuner 204, the television broadcasting signal is processed, and predetermined bit stream data (transport stream) BSD corresponding to the user's selected channel is output.

The bit stream data BSD output from the digital tuner 204 is supplied to the bit stream processing unit 201. With this bit stream processing unit 201, stereoscopic image data, audio data, caption data for caption units, disparity vectors, and so forth, are extracted from the bit stream data BSD. At the bit stream processing unit 201, the data of the left eye captions and right eye captions is synthesized as to the stereoscopic image data, and stereoscopic image data for display is generated. At this time, at the bit stream processing unit 201, disparity is provided between the right eye captions and left eye captions based on the disparity vectors.

The stereoscopic image data for display generated at the bit stream processing unit 201 is supplied to the video signal processing circuit 205. At this video signal processing circuit 205, image quality adjustment processing and the like is performed on the output stereoscopic image data as necessary. The stereoscopic image data for display following processing that is output from this video signal processing circuit 205 is supplied to the HDMI transmission unit 206.

Also, the audio data obtained at the bit stream processing unit 201 is supplied to the audio signal processing circuit 207. At the audio signal processing circuit 207, the audio data is subjected to audio quality adjustment processing and so forth according to need. The audio data after processing that is output from this audio signal processing circuit 207 is supplied to the HDMI transmission unit 206. The stereoscopic image data and audio data supplied to the HDMI transmission unit 206 are then transmitted from the HDMI terminal 202 to the HDMI cable 400 by an HDMI TMDS channel.

### [Configuration Example of Bit Stream Processing Unit]

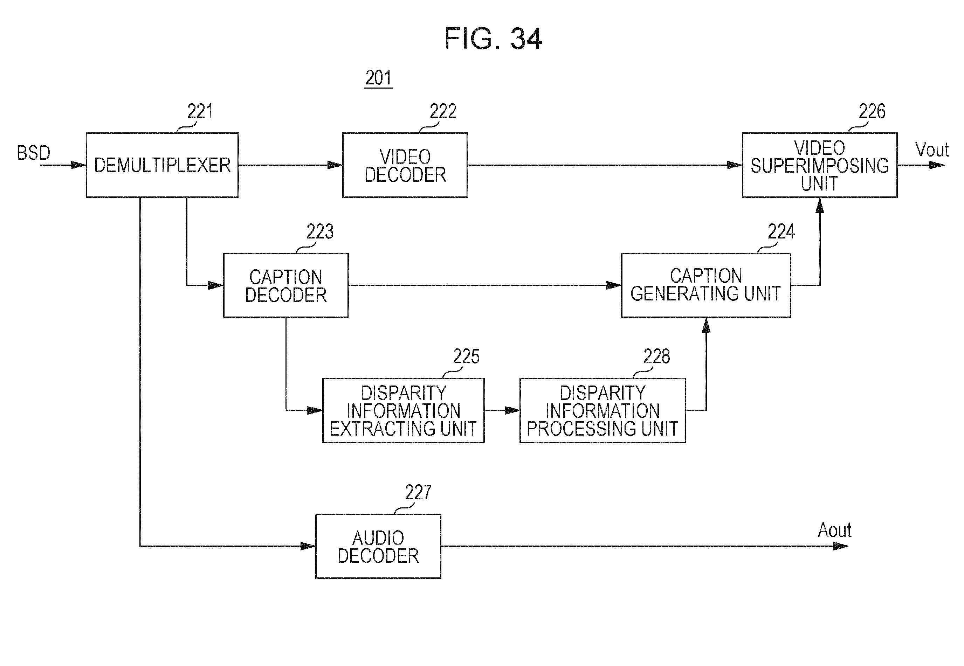

Fig. 34 illustrates a configuration example of the bit stream processing unit 201. This bit stream processing unit 201 is configured to correspond to the above transmission data generating unit 110 shown in Fig. 2. This bit stream processing unit 201 includes a demultiplexer 221, a video decoder 222, and a caption decoder 223. Also, this bit stream processing unit 201 includes a stereoscopic image caption generating unit 224, a disparity information extracting unit 225, a video superimposing unit 226, an audio decoder 227, and a disparity information processing unit 228.

The demultiplexer 221 extracts the packets for video, audio, and captions, from the bit stream data BSD, and sends to the decoders. The video decoder 222 performs processing opposite to that of the video encoder 113 of the transmission data generating unit 110 described above. That is to say, the video elementary stream is reconstructed from the video packets extracted at the demultiplexer 221, and decoding processing is performed to obtain stereoscopic image data including left eye image data and right eye image data. The transmission format for this stereoscopic image data is, for example, the above-described first transmission format ("Top And Bottom" format), the second transmission format is ("Side By Side" format), the third transmission format ("Frame Sequential" format), or the like (see Fig. 4).

The caption decoder 223 performs processing opposite to that of the caption encoder 133 of the transmission data generating unit 110 described above. That is to say, this caption decoder 223 reconstructs the caption elementary stream (caption data stream) from the packets of the captions extracted at the demultiplexer 221, performs decoding processing, and obtains caption data (ARIB format caption data) for the caption units.

The disparity information extracting unit 225 extracts disparity vectors (vector information), corresponding to each caption unit, from the stream of captions obtained by the caption decoder 223. In this case, disparity vectors for each caption unit (individual disparity vectors) or disparity vectors common to the caption units (common disparity vectors) are obtained (See Fig. 11 through Fig. 12).

As described above, a caption data stream includes data of ARIB format captions (caption units) and disparity information (disparity vectors). The disparity information is inserted as management information of the caption data. Accordingly, the disparity information extracting unit 225 can extract disparity vectors in manner correlated with the caption data of each caption unit.

The disparity information extracting unit 225 obtains disparity information used in common during the caption display period (see "default_disparity" in Fig. 24). Also, this disparity information extracting unit 225 may also obtain disparity information sequentially updated during the caption display period (see "disparity_update" in Fig. 25). The disparity information (disparity vectors) extracted by the disparity information extracting unit 225 are sent to the stereoscopic image caption generating unit 224 via the disparity information processing unit 228. The disparity information sequentially updated during the caption display period is made up of disparity information of the first frame of the caption display period, and disparity information of frames at each of subsequent base segment periods (updating frame intervals), as described above.

The disparity information processing unit 228 transmits the disparity information used in common during the caption display period to the stereoscopic image caption generating unit 224 without any change. On the other hand, with regard to the disparity information sequentially updated during the caption display period, the disparity information processing unit 228 subjects this to interpolation processing, generates disparity information at arbitrary frame intervals during the caption display period, e.g., one frame interval, and transmits this to the stereoscopic image caption generating unit 224.

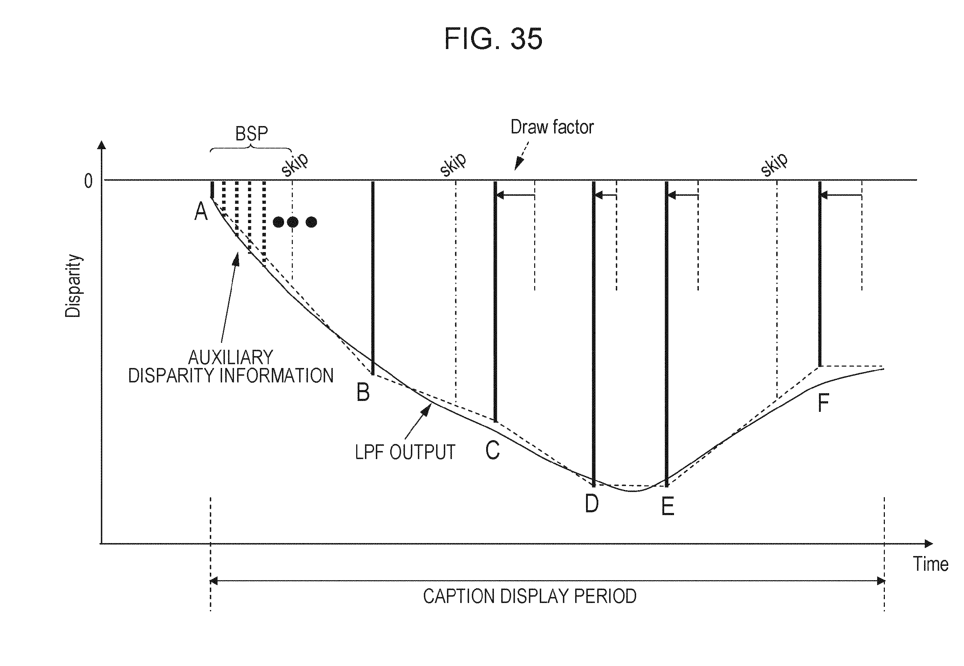

The disparity information processing unit 228 performs interpolation processing involving low-pass filter (LPF) processing in the temporal direction (frame direction) for this interpolation processing, rather than linear interpolation processing, so that the change in disparity information at predetermined frame intervals following the interpolation processing will be smooth in the temporal direction (frame direction). Fig. 35 illustrates an example of interpolation processing involving the aforementioned LPF processing at the disparity information processing unit 228. This example corresponds to the updating example of disparity information in Fig. 29 described above.

The stereoscopic image caption generating unit 224 generates data of left eye captions and right eye captions to be superimposed on each of the left eye image and right eye image. This generating processing is performed based on the caption data of each caption unit obtained by the caption decoder 223, and the disparity information (disparity vectors) supplied via the disparity information processing unit 228. This stereoscopic image caption generating unit 224 then outputs the data of the left eye captions and right eye captions (bitmap data).

In this case, the left eye and right eye captions (caption units) are the same information. However, the superimposing position of the left eye caption and right eye caption within the image are shifted in the horizontal direction, by an amount equivalent to a disparity vector, for example. Thus, caption subjected to disparity adjustment in accordance with the perspective of each object within the image can be used for the same caption to be superimposed on the left eye image and right eye image, and consistency of perspective with each object within the image can be maintained in this caption display.

Now, in the event that only disparity information (disparity vectors) used in common during the caption display period is sent from the disparity information processing unit 228, the stereoscopic image caption generating unit 224 uses this disparity information. Also, in the event that disparity information sequentially updated during the caption display period is also further sent from the disparity information processing unit 228, the stereoscopic image caption generating unit 224 uses one or the other. Which to use is constrained by information (see "rendering_level" in Fig. 24) indicating the level of correlation of disparity information (disparity) that is essential at the reception side (decoder side) for displaying captions, included in the extended display control data unit, as described above, for example. In this case, in the event of "00" for example, user settings are applied. Using disparity information sequentially updated during the caption display period enables disparity to be applied to the left eye and right eye to be dynamically changed in conjunction with changes in the contents of the image.

The video superimposing unit 226 superimposes left eye and right eye caption data (bitmap data) generated at the stereoscopic image caption generating unit 224, as to the stereoscopic image data (left eye image data, right eye image data) obtained at the video decoder 222, and obtains display stereoscopic image data Vout. The video superimposing unit 226 then externally outputs the display stereoscopic image data Vout from the bit stream processing unit 201.

Also, the audio decoder 227 performs processing the opposite from that of the audio encoder 117 of the transmission data generating unit 110 described above. That is to say, the audio decoder 227 reconstructs the audio elementary stream from the audio packets extracted at the demultiplexer 221, performs decoding processing, and obtains audio data Aout. The audio decoder 227 then externally outputs the audio data Aout from the bit stream processing unit 201.

The operations of the bit stream processing unit 201 shown in Fig. 34 will be described in brief. The bit stream data BSD output from the digital tuner 204 (see Fig. 33) is supplied to the demultiplexer 221. At the demultiplexer 221, packets of video, audio, and captions are extracted from the bit stream data BSD, and supplied to the decoders.

The video elementary stream from the video packets extracted at the demultiplexer 221 is reconstructed at the video decoder 222, and further subjected to decoding processing, thereby obtaining stereoscopic image data including the left eye image data and right eye image data. This stereoscopic image data is supplied to the video superimposing unit 226.

Also, at the caption decoder 223, the caption elementary stream is reconstructed from the caption packets extracted at the demultiplexer 221, and further decoding processing is performed, thereby obtaining caption data for the caption units (ARIB format caption data). This caption data for the caption units is supplied to the stereoscopic image caption generating unit 224.

Also, with the disparity information extracting unit 225, disparity vectors (disparity information) corresponding to the caption units are extracted from the caption stream obtained through the caption decoder 223. In this case, the disparity information extracting unit 225 obtains disparity vectors for each caption unit (individual disparity vectors) or a disparity vector common to the caption units (common disparity vector).

Also, the disparity information extracting unit 225 obtains disparity information used in common during the caption display period, or disparity information sequentially updated during the caption display period along with this. The disparity information (disparity vectors) extracted at the disparity information extracting unit 225 is sent to the stereoscopic image caption generating unit 224 through the disparity information processing unit 228. At the disparity information processing unit 228, the following processing is performed regarding disparity information sequentially updated during the caption display period. That is to say, interpolation processing involving LPF processing in the temporal direction (frame direction) is performed at the disparity information processing unit 228, thereby generating disparity information at an arbitrary frame interval during the caption display period, e.g., one frame interval, which is then transmitted to the stereoscopic image caption generating unit 224.

At the stereoscopic image caption generating unit 224, left eye caption and right eye caption data (bitmap data) to be superimposed on the left eye image and right eye image respectively, is generated based on the caption data of the caption units and the disparity vectors corresponding to the captions units. In this case, the captions of the right eye for example, have the superimposed positions within the image as to the left eye captions shifted in the horizontal direction by an amount equivalent to the disparity vector. This left eye caption and right eye caption data is supplied to the video superimposing unit 226.

At the video superimposing unit 226, the left eye caption and right eye caption data (bit map data) generated at the stereoscopic image caption generating unit 224 is superimposed onto the stereoscopic image data obtained at the video decoder 222, thereby obtaining display stereoscopic image data Vout. This display stereoscopic image data Vout is externally output from the bit stream processing unit 201.

Also, at the audio decoder 227, the audio elementary stream is reconstructed from the audio packets extracted at the demultiplexer 221, and further decoding processing is performed, thereby obtaining audio data Aout corresponding to the stereoscopic image data Vout for display that has been described above. This audio data Aout is externally output from the bit stream processing unit 201.

AS described above, with the set top box 200 shown in Fig. 33, disparity vectors (disparity information) serving as management information of caption data is inserted into a received caption data stream, and the caption data and disparity vectors are correlated. Accordingly, with the bit stream processing unit 201, the caption units (captions) to be superimposed on the left eye image and right eye image can be provided with suitable disparity, using the corresponding disparity vectors (disparity information). Accordingly, in the display of the caption units (captions), the consistency in perspective with the objects in the image can be maintained in an optimal state.

Also, with the set top box 200 shown in Fig. 33, the display information extracting unit 225 of the bit stream processing unit 201 obtains disparity information used in common during the caption display period, or disparity information sequentially updated during the caption display period along therewith. Due to the stereoscopic image caption generating unit 224 using disparity information sequentially updated during the caption display period, the disparity to be provided to the captions of the left eye and right eye can be dynamically changed in conjunction with changes in the contents of the image.

Also, with the set top box 200 shown in Fig. 33, the disparity information processing unit 228 of the bit stream processing unit 201 performs interpolation processing on disparity information sequentially updated within the caption display period, and generates disparity information of arbitrary frame intervals within the caption display period. In this case, even in the event that disparity information is transmitted from the transmission side (broadcasting station 100) at each base segment period (updating frame interval) such as 16 frames or the like, the disparity to be provided between the left eye and right eye captions can be controlled at fine intervals, e.g., every frame.

Also, with the set top box 200 shown in Fig. 33, the interpolation processing at the disparity information processing unit 228 of the bit stream processing unit 201 is performed involving low-pass filter processing in the temporal direction (frame direction). Accordingly, even in the event that disparity information is transmitted from the transmission side (broadcasting station 100) at each base segment period (updating frame interval), change of the disparity information following interpolation processing in the temporal direction can be smoothed (see Fig. 35). Accordingly, unnatural sensation of the transition of disparity applied between the left eye and right eye captions becoming discontinuous at each updating frame interval can be suppressed.

### [Description of Television Receiver]

Returning to Fig. 1, the television receiver 300 receives stereoscopic image data transmitted from the set top box 200 via the HDMI cable 400. This television receiver 300 includes a 3D signal processing unit 301. This 3D signal processing unit 301 subjects the stereoscopic image data to processing (decoding processing) corresponding to the transmission method to generate left eye image data and right eye image data.

### [Configuration Example of Television Receiver]

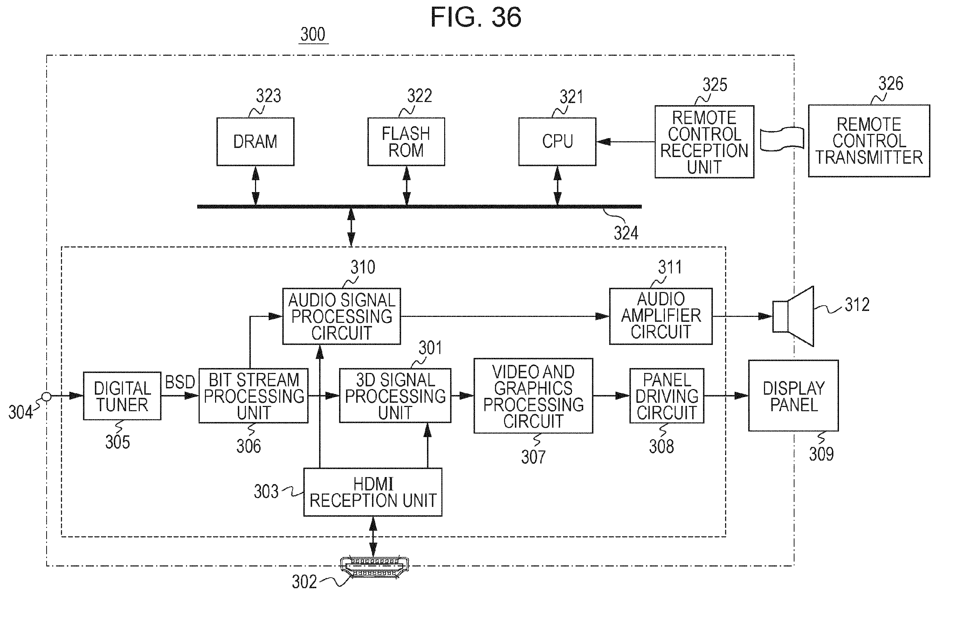

A configuration example of the television receiver 300 will be described. Fig. 36 illustrates a configuration example of the television receiver 300. This television receiver 300 includes a 3D signal processing unit 301, an HDMI terminal 302, an HDMI reception unit 303, an antenna terminal 304, a digital tuner 305, and a bit stream processing unit 306.

Also, this television receiver 300 includes a video/graphics processing circuit 307, a panel driving circuit 308, a display panel 309, an audio signal processing circuit 310, an audio amplifier circuit 311, and a speaker 312. Also, this television receiver 300 includes a CPU 321, flash ROM 322, DRAM 323, internal bus 324, a remote control reception unit 325, and a remote control transmitter 326.

The antenna terminal 304 is a terminal for inputting a television broadcasting signal received at a reception antenna (not illustrated). The digital tuner 305 processes the television broadcasting signal input to the antenna terminal 304, and outputs predetermined bit stream data (transport stream) BDS corresponding to the user's selected channel.

The bit stream processing unit 306 is configured in the same way as with the bit stream processing unit 201 of the set top box 200 shown in Fig. 33. This bit stream processing unit 306 extracts stereoscopic image data, audio data, caption data for caption units, disparity vectors, and so forth, from the bit stream data BSD. Also, the bit stream processing unit 306 synthesizes the data of left eye captions and right eye captions onto stereoscopic image data, so as to generate stereoscopic image data for display with captions superimposed thereupon, and outputs. Also, the bit stream processing unit 306 outputs audio data.

The HDMI reception unit 303 receives uncompressed image data and audio data supplied to the HDMI terminal 302 via the HDMI cable 400 by communication conforming to HDMI. This HDMI reception unit 303 of which the version is, for example, HDMI 1.4a, is in a state in which the stereoscopic image data can be handled.

The 3D signal processing unit 301 subjects the stereoscopic image data received at the HDMI reception unit 303, or obtained at the bit stream processing unit 306, to decoding processing and generates left eye image data and right eye image data. The 3D signal processing unit 301 in this case performs decoding processing corresponding to the transmission data format (see Fig. 4) for stereoscopic image data obtained at the bit stream processing unit 306. Also, the 3D signal processing unit 301 performs decoding processing corresponding to the TMDS transmission data structure for stereoscopic image data received at the HDMI reception unit 303.

The video/graphics processing circuit 307 generates image data for displaying a stereoscopic image based on the left eye image data and right eye image data generated at the 3D signal processing unit 301. Also, the video/graphics processing circuit 307 subjects the image data to image quality adjustment processing according to need. Also, the video/graphics processing circuit 307 synthesizes the data of superimposition information, such as menus, program listings, and so forth, as to the image data according to need. The panel driving circuit 308 drives the display panel 309 based on the image data output from the video/graphics processing circuit 307. The display panel 309 is configured of, for example, an LCD (Liquid Crystal Display), PDP (Plasma Display Panel), or the like.

The audio signal processing circuit 310 subjects the audio data received at the HDMI reception unit 303 or obtained at the bit stream processing unit 306 to necessary processing such as D/A conversion or the like. The audio amplifier circuit 311 amplifies the audio signal output from the audio signal processing circuit 310, supplies to the speaker 312.

The CPU 321 controls the operation of each unit of the television receiver 300. The flash ROM 322 performs storing of control software and storing of data. The DRAM 323 makes up the work area of the CPU 321. The CPU 321 loads the software and data read out from the flash ROM 322 to the DRAM 323, starts up the software, and controls each unit of the television receiver 300.

The remote control unit 325 receives the remote control signal (remote control code) transmitted from the remote control transmitter 326, and supplies to the CPU 321. The CPU 321 controls each unit of the television receiver 300 based on this remote control code. The CPU 321, flash ROM 322, and DRAM 323 are connected to the internal bus 324.

The operations of the television receiver 300 illustrated in Fig. 36 will briefly be described. The HDMI reception unit 303 receives the stereoscopic image data and audio data transmitted from the set top box 200 connected to the HDMI terminal 302 via the HDMI cable 400. This stereoscopic image data received at this HDMI reception unit 303 is supplied to the 3D signal processing unit 301. Also, the audio data received at this HDMI reception unit 303 is supplied to the audio signal processing circuit 310.

The television broadcasting signal input to the antenna terminal 304 is supplied to the digital tuner 305. With this digital tuner 305, the television broadcasting signal is processed, and predetermined bit stream data (transport stream) BSD corresponding to the user's selected channel is output.

The bit stream data BSD output from the digital tuner 305 is supplied to the bit stream processing unit 306. With this bit stream processing unit 306, stereoscopic image data, audio data, caption data for caption units, disparity vectors, and so forth are extracted from the bit stream data. Also, with this bit stream processing unit 306, data of left eye captions and right eye captions is synthesized as to the stereoscopic image data, and display stereoscopic image data is generated.

The display stereoscopic image data generated at the bit stream processing unit 306 is supplied to the 3D signal processing unit 301. Also, the audio data obtained at the bit stream processing unit 306 is supplied to the audio signal processing circuit 310.

With the 3D signal processing unit 301, the stereoscopic image data received at the HDMI reception unit 303, or stereoscopic image data obtained at the bit stream processing unit 306, is subjected to decoding processing, and left eye image data and right eye image data are generated. The left eye image data and right eye image data are supplied to the video/graphics processing circuit 307. At this video/graphics processing circuit 307, image data for displaying a stereoscopic image is generated based on the left eye image data and right eye image data, and image quality adjustment processing, and synthesizing processing of superimposed information data, is also performed according to need.

The image data obtained at this video/graphics processing circuit 307 is supplied to the panel driving circuit 308. Accordingly, a stereoscopic image is displayed on the display panel 309. For example, a left eye image according to left eye image data, and a right eye image according to right eye image data are alternately displayed on the display panel 309 in a time-sharing manner. The viewer can view the left eye image alone by the left eye, and the right eye image alone by the right eye, and consequently can sense the stereoscopic image by wearing shutter glasses wherein the left eye shutter and right eye shutter are alternately opened in sync with display of the display panel 309.

Also, at the audio signal processing circuit 310, the audio data received at the HDMI reception unit 303 or obtained at the bit stream processing unit 306 is subjected to necessary processing such as D/A conversion or the like. This audio data is amplified at the audio amplifier circuit 311, and then supplied to the speaker 312. Accordingly, audio corresponding to the display image of the display panel 309 is output from the speaker 312.

### <2. Modifications>

Note that with the above-described embodiment, the stereoscopic image display system 10 has been illustrated as being configured of a broadcasting station 100, set top box 200, and television receiver 300. However, the television receiver 300 has a bit stream processing unit 306 functioning in the same way as the bit stream processing unit 201 within the set top box 200, as shown in Fig. 36. Accordingly, an stereoscopic image display system 10A configured of the broadcasting station 100 and television receiver 300 is also conceivable, as shown in Fig. 37.

Also, with the above-described embodiment, an example has been illustrated where a data stream including stereoscopic image data (bit stream data) is broadcast from the broadcasting station 100. However, this invention can be similarly applied to a system of a configuration where the data stream is distributed to a reception terminal using a network such as the Internet or the like.

Also, with the above-described embodiment, an example has been illustrated where the set top box 200 and television receiver 300 are connected by an HDMI digital interface. However, the present invention can be similarly applied to a case where these are connected by a digital interface similar to an HDMI digital interface (including, in addition to cable connection, wireless connection).

Also, with the above-described embodiment, an example has been illustrated where caption units (captions) are handled as superimposed information. However, the present invention can be similarly applied to arrangements where superimposing information such as other graphics information, text information, and so forth, are also handled.

### Industrial Applicability

This invention is applicable to an stereoscopic image system capable of displaying superimposed information such as captions on an image.

### Reference Signs List

10, 10A stereoscopic image display system
100 broadcasting station
110 transmission data generating unit
113 video encoder
117 audio decoder
122 multiplexer
130 data extracting unit
130a data recording medium
131 disparity information creating unit
132 caption generating unit
133 caption encoder
200 set top box (STB)
201 bit stream processing unit
202 HDMI terminal
203 antenna terminal
204 digital tuner
205 video signal processing circuit
206 HDMI transmission unit
207 audio signal processing circuit
211 CPU
215 remote control reception unit
216 remote control transmitter
221 demultiplexer
222 video decoder
223 caption decoder
224 stereoscopic image caption generating unit
225 disparity information extracting unit
226 video superimposing unit
227 audio decoder
228 disparity information processing unit
300 television receiver (TV)
301 3D signal processing unit
302 HDMI terminal
303 HDMI receiver
304 antenna terminal
305 digital tuner
306 bit stream processing unit
307 video/graphics processing circuit
308 panel driving circuit
309 display panel
310 audio signal processing circuit
311 audio amplifying circuit
312 speaker
321 CPU
325 remote control reception unit
326 remote control transmission unit
400 HDMI cable

## Claims

1. A stereoscopic image data transmission device comprising:
an image data output unit configured to output left eye image data and right eye image data configuring a stereoscopic image;
a superimposing information data output unit configured to output data of superimposing information to be superimposed on an image of said left eye image data and said right eye image data;
a disparity information output unit configured to output disparity information for providing disparity by shifting superimposing information to be superimposed on the image of said left eye image data and said right eye image data; and
a data transmission unit configured to transmit a multiplexed data stream having a first data stream including said image data and a second data stream including said data of superimposing information and said disparity information;
wherein said second data stream has a data unit for sending display control information serving as management information of said superimposing information;
and wherein said disparity information is inserted in said data unit.

2. The stereoscopic image data transmission device according to Claim 1, wherein said disparity information is first disparity information used in common within a predetermined number of frame periods during which said superimposing information is displayed, or said first disparity information and second disparity information sequentially updated within said predetermined number of frame periods;
and wherein flag information indicating existence of said second disparity information is inserted in said data unit.

3. The stereoscopic image data transmission device according to Claim 2, wherein said second disparity information is made up of disparity information of the first frame in said predetermined number of frame periods, and disparity information of frames every subsequent updating frame interval.

4. The stereoscopic image data transmission device according to Claim 3, wherein said second disparity information has added thereto flag information indicating whether or not there is updating of said disparity information, for each frame of said every updating frame interval.

5. The stereoscopic image data transmission device according to Claim 3, wherein said second disparity information has added thereto information for adjusting said updating frame interval, for each frame of said every updating frame interval.

6. The stereoscopic image data transmission device according to Claim 3, wherein said data unit has information specifying frame cycle inserted thereto.

7. The stereoscopic image data transmission device according to Claim 1, wherein disparity information inserted in said data unit is disparity information corresponding to particular superimposing information displayed on the same screen, or disparity information corresponding to a plurality of superimposing information displayed on the same screen.

8. The stereoscopic image data transmission device according to Claim 2, wherein said data unit has inserted therein information indicating a level of correspondence as to said disparity information, essential at the time of displaying said superimposing information.

9. The stereoscopic image data transmission device according to Claim 1, wherein said second data stream includes, in a layer of said management information, flag information indicating whether or not said second data stream corresponds to extended display of said superimposing information.

10. The stereoscopic image data transmission device according to Claim 1, wherein data of said superimposing information is ARIB format caption text data;
and wherein, in said second data stream, said disparity information is inserted in a data unit of said display control information included in caption management data.

11. A stereoscopic image data transmission method comprising:
an image data output step to output left eye image data and right eye image data configuring a stereoscopic image;
a superimposing information data output step to output data of superimposing information to be superimposed on an image of said left eye image data and said right eye image data;
a disparity information output step to output disparity information for providing disparity by shifting superimposing information to be superimposed on the image of said left eye image data and said right eye image data; and
a data transmission step to transmit a multiplexed data stream having a first data stream including said image data and a second data stream including said data of superimposing information and said disparity information;
wherein said second data stream has a data unit for sending display control information serving as management information of said superimposing information;
and wherein said disparity information is inserted in said data unit.

12. A stereoscopic image data reception device comprising:
a data reception unit configured to receive a multiplexed data stream having a first data stream and a second data stream;
wherein said first data stream includes left eye image data and right eye image data configuring a stereoscopic image;
and wherein said second data stream includes data of superimposing information to be superimposed on an image of said left eye image data and said right eye image data, and disparity information for providing disparity by shifting superimposing information to be superimposed on the image of said left eye image data and said right eye image data;
and wherein said second data stream has a data unit for sending display control information serving as management information of said superimposing information, and said disparity information is inserted in said data unit;
and further comprising
an image data obtaining unit configured to obtain said left eye image data and said right eye image data from said first data stream included in said multiplexed data stream;
a superimposing information data obtaining unit configured to obtain data of said superimposing information from said second data stream included in said multiplexed data stream;
a disparity information obtaining unit configured to obtain said disparity information from said second data stream included in said multiplexed data stream; and
an image data processing unit configured to provide disparity to the same superimposing information to be superimposed on a left eye image and a right eye image, using said said left eye image data and said right eye image data, said disparity information, and data of said superimposing information, thereby obtaining data of a left eye image upon which said superimposing information has been superimposed and data of a right eye image upon which said superimposing information has been superimposed.

13. The stereoscopic image data reception device according to Claim 12, wherein disparity information inserted in said data unit is disparity information sequentially updated within a predetermined number of frame periods during which said superimposing information is displayed, and is made up of disparity information of the first frame in said predetermined number of frame periods, and disparity information of frames every subsequent updating frame interval.

14. The stereoscopic image data reception device according to Claim 13, wherein said image data processing unit performs interpolation processing on disparity information of a plurality of frames making up disparity information sequentially updated within said predetermined number of frame periods, and generates and uses disparity information of arbitrary frame intervals within said predetermined number of frame periods.

15. The stereoscopic image data reception device according to Claim 14, wherein said interpolation processing involves low-pass filter processing in the temporal direction.

16. A stereoscopic image data reception method comprising:
a data reception step configured to receive a multiplexed data stream having a first data stream and a second data stream;
wherein said first data stream includes left eye image data and right eye image data configuring a stereoscopic image;
and wherein said second data stream includes data of superimposing information to be superimposed on an image of said left eye image data and said right eye image data, and disparity information for providing disparity by shifting superimposing information to be superimposed on the image of said left eye image data and said right eye image data;
and wherein said second data stream has a data unit for sending display control information serving as management information of said superimposing information, and said disparity information is inserted in said data unit;
and further comprising
an image data obtaining step configured to obtain said left eye image data and said right eye image data from said first data stream included in said multiplexed data stream;
a superimposing information data obtaining step configured to obtain data of said superimposing information from said second data stream included in said multiplexed data stream;
a disparity information obtaining step configured to obtain said disparity information from said second data stream included in said multiplexed data stream; and
an image data processing step configured to provide disparity to the same superimposing information to be superimposed on a left eye image and a right eye image, using said left eye image data and said right eye image data, said disparity information, and data of said disparity information, thereby obtaining data of a left eye image upon which said superimposing information has been superimposed and data of a right eye image upon which said superimposing information has been superimposed.
